# EUROPEAN PATENT APPLICATION

(11) **EP 4 799 784 A1**
(43) Date of publication of application: **02.09.2026**
(21) Application number: 24882483.1
(22) Date of filing: 25.10.2024
(51) Int. Cl.: B29B 17/02, B29B 17/04

(54) **POLYMER RESIN RECOVERY DEVICE**

(30) Priority: 26.10.2023 JP 2023183802; 26.10.2023 JP 2023183803; 17.06.2024 JP 2024097737; 19.09.2024 JP 2024162410
(71) Applicant: Toyobo Co., Ltd., Kita-ku Osaka-shi, Osaka 530-0001 (JP)
(72) Inventor: IKEUCHI, Yusuke, Otsu-shi, Shiga 520-0292 (JP); INAGAKI, Jun, Otsu-shi, Shiga 520-0292 (JP); KITANO, Tomohiko, Otsu-shi, Shiga 520-0292 (JP); MORI, Mei, Tsuruga-shi, Fukui 914-8550 (JP)
(74) Representative: Vossius & Partner Patentanwälte Rechtsanwälte mbB
(86) International application number: PCT/JP2024/038061
(87) International publication number: WO 2025/089375

(57) **Abstract**

An object of the present invention is to provide a novel polymer resin recovery apparatus for recovering a polymer resin with suppressed deterioration from a composite material containing the polymer resin. The present invention relates to a polymer resin recovery apparatus for treating a composite material comprising a polymer resin with high-pressure hot water and recovering the polymer resin from the composite material, the apparatus comprising: a heat treatment unit configured to accommodate the composite material and bring the composite material into contact with high-pressure hot water; a separation unit comprising a first filter member through which the polymer resin melted in the heat treatment unit passes, while restricting movement of the composite material and movement of unmelted matter in the heat treatment unit; and a water flow generator configured to supply a water flow to the separation unit.

## Description

### TECHNICAL FIELD

The present invention relates to an apparatus for recovering a polymer resin from a composite material containing the polymer resin, and a method for recovering a polymer resin from a composite material containing the polymer resin using the apparatus.

### BACKGROUND ART

In recent years, attention has been focused on recycling (resource recovery) of waste materials from the viewpoint of reduction of loads on the environment.

A method for recycling a polymer resin includes chemical recycling, in which a material is decomposed into monomers, and the monomers are repolymerized for reuse, and material recycling, in which a material is melted and re-pelletized for reuse without being decomposed into monomers. From the viewpoint of energy costs, material recycling is preferable.

As an apparatus for treating a composite material containing a polymer resin and recovering raw materials, for example, an apparatus is known which has, in a single closed space, a first hydrolysis unit in which a material to be treated containing a polyester-based resin is exposed to a steam atmosphere to be hydrolyzed, and a second hydrolysis unit in which the obtained hydrolyzed material is placed in hot water, heated, and further hydrolyzed (Patent Document 1).

### RELATED ART DOCUMENT

### PATENT DOCUMENT

Patent Document 1: Japanese Unexamined Patent Application Publication No. 2015-172114

### SUMMARY OF THE INVENTION

### PROBLEMS TO BE SOLVED BY THE INVENTION

However, the apparatus disclosed in Patent Document 1 recovers the polyester-based resin contained in the composite material as a hydrolyzed product (specifically, terephthalic acid). Therefore, this apparatus is unable to recover a polymer resin with suppressed deterioration, which is suitable for material recycling.

The present invention has been made in view of the above circumstances, and an object of the present invention is to provide a novel polymer resin recovery apparatus for recovering a polymer resin with suppressed deterioration from a composite material containing the polymer resin.

### SOLUTIONS TO THE PROBLEMS

The present invention, which has been made to solve the above-described problems, is as follows.
[1] A polymer resin recovery apparatus for treating a composite material comprising a polymer resin with high-pressure hot water and recovering the polymer resin from the composite material, the apparatus comprising:
   a heat treatment unit configured to accommodate the composite material and bring the composite material into contact with high-pressure hot water;
   a separation unit comprising a first filter member through which the polymer resin melted in the heat treatment unit passes, while restricting movement of the composite material and movement of unmelted matter in the heat treatment unit; and
   a water flow generator configured to supply a water flow to the separation unit.
[2] The polymer resin recovery apparatus according to [1], comprising a cooling mechanism configured to cool the melted polymer resin separated in the separation unit together with high-pressure hot water to solidify the polymer resin.
[3] The polymer resin recovery apparatus according to [2], comprising a recovery unit configured to recover the solidified polymer resin.
[4] The polymer resin recovery apparatus according to [3], wherein the recovery unit comprises a second filter member to separate the solidified polymer resin by filtration.
[5] The polymer resin recovery apparatus according to any one of [1] to [4], comprising a hot water supply unit configured to supply hot water to the heat treatment unit.
[6] The polymer resin recovery apparatus according to [5], comprising a hot water preparation mechanism upstream of the hot water supply unit.
[7] The polymer resin recovery apparatus according to any one of [1] to [6], wherein the heat treatment unit comprises a heating mechanism.
[8] The polymer resin recovery apparatus according to any one of [1] to [7], wherein the water flow generator is a stirring blade provided in the heat treatment unit.
[9] The polymer resin recovery apparatus according to any one of [1] to [8], comprising a discharge unit configured to discharge the polymer resin melted in the heat treatment unit together with high-pressure hot water.
[10] The polymer resin recovery apparatus according to any one of [1] to [9], wherein the first filter member is detachable and attachable.
[11] The polymer resin recovery apparatus according to any one of [1] to [10], wherein the first filter member comprises a metal.
[12] The polymer resin recovery apparatus according to [11], wherein the metal comprises at least one selected from stainless steel and aluminum.
[13] The polymer resin recovery apparatus according to any one of [1] to [12], wherein the first filter member has a plurality of through holes (A), and an opening area of each through hole (A) is 0.001 mm² to 200 cm².
[14] The polymer resin recovery apparatus according to [4], wherein the second filter member has a plurality of through holes (B), and an opening area of each through hole (B) is 0.001 mm² to 1 cm².
[15] The polymer resin recovery apparatus according to any one of [1] to [14], wherein the heat treatment unit has an internal volume of 0.5 L to 3000 L.
[16] The polymer resin recovery apparatus according to [3], comprising a plurality of the recovery units.
[17] The polymer resin recovery apparatus according to [1], comprising a plurality of the heat treatment units.
[18] A method for recovering a polymer resin from a composite material comprising the polymer resin, using the polymer resin recovery apparatus according to any one of [1] to [17].
[19] The method for recovering a polymer resin according to [18], wherein the composite material is an airbag fabric comprising silicone, and the polymer resin is a polyamide-based resin or a polyester-based resin.
[20] A recycled product comprising, in at least part of raw materials, the polyamide-based resin or the polyester-based resin obtained by the method according to [19].
[21] Use of the polymer resin recovery apparatus according to any one of [1] to [17] to recover a polymer resin from a composite material comprising the polymer resin.
[22] The use of the polymer resin recovery apparatus according to [21], wherein the composite material is an airbag fabric comprising silicone, and the polymer resin is a polyamide-based resin or a polyester-based resin.
   A polymer resin recovery apparatus for treating a composite material containing a polymer resin with high-pressure hot water and recovering the polymer resin from the composite material, the apparatus comprising:
   a treatment unit, through which high-pressure hot water flows, configured to accommodate the composite material and bring the composite material into contact with the high-pressure hot water;
   a supply unit to supply high-pressure hot water to the treatment unit;
   a discharge unit to discharge the polymer resin that has been melted by the high-pressure hot water supplied to the treatment unit and separated from the composite material, together with the high-pressure hot water;
   a cooling mechanism to cool the discharged melted polymer resin together with high-pressure hot water to solidify the polymer resin; and
   a recovery unit to recover the solidified polymer resin,
   wherein the treatment unit includes a first filter member to restrict movement of the composite material and allow the melted polymer resin to pass therethrough, and
   the recovery unit includes a second filter member to separate the solidified polymer resin by filtration.

### EFFECTS OF THE INVENTION

According to the present invention, it is possible to provide a novel polymer resin recovery apparatus for recovering a polymer resin with suppressed deterioration from a composite material containing the polymer resin. Furthermore, according to the present invention, it is possible to provide a novel polymer resin recovery apparatus in which the use of an alkaline aqueous solution is optional in recovering a polymer resin from a polymer resin airbag fabric, which is a composite material. According to the polymer resin recovery apparatus of the present invention, there is no need to use an alkaline aqueous solution or the amount of an alkaline aqueous solution used can be reduced in treating a polymer resin airbag fabric, thereby suppressing damage (deterioration) of the polymer resin caused by alkaline treatment. Preferably, according to the present invention, it is also possible to provide a novel polymer resin recovery apparatus in which the complexity of recovery operation of a polymer resin is reduced.

### BRIEF DESCRIPTION OF THE DRAWINGS

[FIG. 1] FIG. 1 is a schematic view showing an example of a polymer resin recovery apparatus according to an embodiment of the present invention.
[FIG. 2] FIG. 2 is a schematic view showing another example of a polymer resin recovery apparatus according to an embodiment of the present invention.
[FIG. 3] FIG. 3 is a schematic view showing yet another example of a polymer resin recovery apparatus according to an embodiment of the present invention.
[FIG. 4] FIG. 4 is a schematic view showing yet another example of a polymer resin recovery apparatus according to an embodiment of the present invention.
[FIG. 5] FIG. 5 is a graph showing DSC curves of nylon 66 in air and in water.

### MODE FOR CARRYING OUT THE INVENTION

The present invention relates to an apparatus applicable to a method for treating a composite material containing a polymer resin with high-pressure hot water. In the following description, an apparatus applicable to a method for treating an airbag fabric, as the composite material, in which a polyamide-based resin and/or a polyester-based resin (hereinafter also referred to as "polyamide/polyester") or the like is used as the polymer resin is described as a representative example, but the apparatus of the present invention is also applicable to composite materials other than the airbag fabric.

When an airbag fabric (composite material) formed from polyamide/polyester (polymer resin) is treated with high-pressure hot water, the polyamide/polyester (polymer resin) melts in the water, while other components (for example, a silicone resin and the like) that constitute the airbag fabric (composite material) do not melt and remain as solid matter. The apparatus of the present invention is applied to a method in which this melted polyamide/polyester (polymer resin) in the treatment liquid is separated in a melted state from the solid matter (such as a silicone resin) by filtration and recovered. Preferably, the apparatus is applied to a method in which the treatment liquid containing the melted polyamide/polyester (polymer resin) separated by filtration from the solid matter (such as a silicone resin) is cooled to solidify the polyamide/polyester (polymer resin), and then the solidified polymer resin is recovered. Also preferably, the apparatus is applied to a method in which the solidified polymer resin is recovered by filtration.

The polymer resin recovery apparatus of the present invention is an apparatus capable of performing the above-mentioned polymer resin recovery method and is characterized by having a heat treatment unit configured to perform a heat treatment with high-pressure hot water, a separation unit including a first filter member through which a polymer resin melted in the heat treatment unit passes, while restricting movement of the composite material and movement of unmelted matter (such as a silicone resin) in the heat treatment unit, and a water flow generator configured to supply a water flow to the separation unit. Hereinafter, the polymer resin recovery apparatus of the present invention will be described with reference to the drawings as necessary. However, the polymer resin recovery apparatus of the present invention is not limited to the following examples illustrated in the drawings and can be modified as appropriate within the scope and spirit of the present invention, and any of these modifications are encompassed within the technical scope of the present invention. Since the examples illustrated in the drawings are schematic diagrams, the ratios of the dimensions and the like may differ from the actual ones.

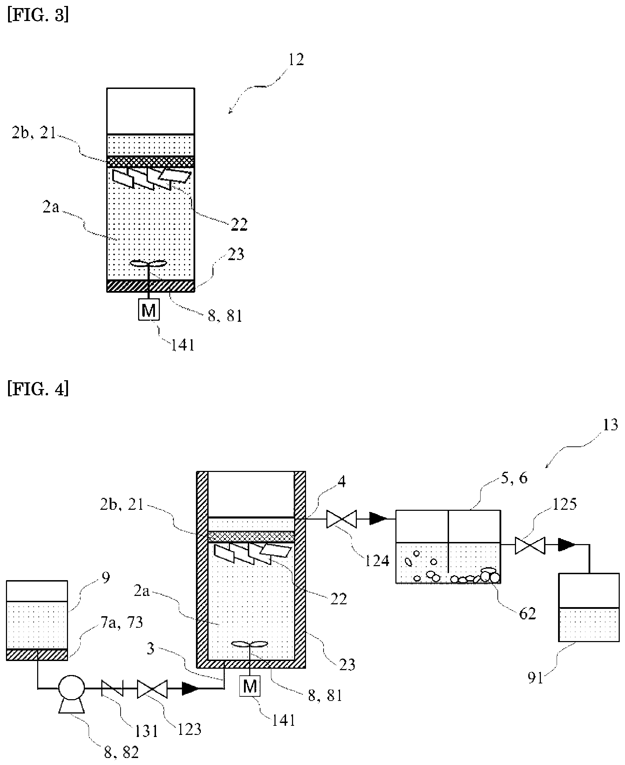

FIG. 3 is a schematic view (schematic cross-sectional view) showing an example of a polymer resin recovery apparatus of the present invention for performing the above-mentioned method. The polymer resin recovery apparatus 12 of the illustrated example includes a container-type heat treatment unit 2a that accommodates a composite material 22, a separation unit 2b that is composed of a first filter member 21, and a water flow generator 8. The water flow generator 8 is provided so that the flow direction of a water flow generated by the water flow generator 8 is the direction from the composite material 22 side to the separation unit 2b side.

In the heat treatment unit 2a, the accommodated composite material 22 (for example, airbag fabric, etc.) is brought into contact with high-pressure hot water to be heat-treated, and thus, the polymer resin (such as polyamide/polyester) melts in the water, while the other components (such as a silicone resin) do not melt and remain as solid matter. In the separation unit 2b, the composite material 22 is held in the water by the first filter member 21, and the polymer resin that has been melted (hereinafter also referred to as the melted polymer resin) and the solid matter are separated by the first filter member 21 provided in the separation unit 2b. Then, the water flow generated by the water flow generator 8 permits efficient separation in the separation unit 2b.

In the polymer resin recovery apparatus 12 illustrated in FIG. 3, the separation unit 2b is arranged inside the heat treatment unit 2a, but the separation unit 2b may be provided separately from the heat treatment unit 2a. For example, a discharge unit for discharging the melted polymer resin and the high-pressure hot water from the heat treatment unit 2a may be provided, and a separation unit equipped with a first filter member may be provided downstream of the discharge unit. When the separation unit 2b is arranged inside the heat treatment unit 2a, it is preferable that a part of the heat treatment unit 2a be partitioned by the first filter member 21 as illustrated in FIG. 3. Alternatively, a basket-shaped container with a lid may be provided inside the heat treatment unit 2a and the composite material 22 may be accommodated therein so that the basket-shaped container functions as the first filter member 21.

In the polymer resin recovery apparatus 12 illustrated in FIG. 3, the water flow generator 8 is specifically a stirring blade 81 provided inside the heat treatment unit 2a. The stirring blade 81 is connected to a motor 141, and by rotating the stirring blade 81 with the motor 141, the water (hot water) in the heat treatment unit 2a is rotated to generate a water flow.

The polymer resin recovery apparatus 12 illustrated in FIG. 3 has a heating mechanism 23 in the heat treatment unit 2a. The heating mechanism 23 is specifically a heater provided on the bottom exterior of the heat treatment unit 2a. When the heat treatment unit 2a is configured to be airtight, the water contained in the heat treatment unit 2a can be heated by the heating mechanism 23 to become high-pressure hot water.

In the polymer resin recovery apparatus 12 illustrated in FIG. 3, the flow direction of a water flow in the separation unit 2b provided inside the heat treatment unit 2a (particularly, a water flow that impinges on the composite material 22 inside the heat treatment unit 2a) is an upward direction. In the present invention, the flow direction of a water flow includes not only the flow direction of a laminar flow but also the flow direction of a turbulent flow, and indicates the main direction of the entire flow whether it is a laminar flow or a turbulent flow. The "upward direction" means the direction from the water bottom toward the water surface (anti-gravity direction).

The polymer resin recovery apparatus 12 may further include at least one selected from the group consisting of a cooling mechanism, a pressurizing mechanism, a safety valve, a back pressure valve, a pressure gauge, and a thermometer. By allowing the apparatus to stand after the heat treatment is stopped, the melted polymer resin separated in the separation unit 2b is solidified as the temperature in the heat treatment unit 2a drops, and thus can be recovered. When the cooling mechanism is provided, the solidification of the polymer resin is achieved more quickly, and the polymer resin 62 with suppressed deterioration can be recovered more efficiently. Examples of the pressurizing mechanism include a vacuum pump, a compressor, and a boiler. The apparatus may be configured such that high-pressure hot water to be brought into contact with the composite material 22 in the heat treatment unit 2a may be introduced from outside the heat treatment unit 2a, or water (hot water) may be converted into high-pressure hot water within the heat treatment unit 2a. When the pressurizing mechanism (for example, a steam boiler capable of injecting high-pressure steam into the heat treatment unit 2a) is provided, water (hot water) can be more easily converted into high-pressure hot water within the heat treatment unit 2a. When the pressure gauge and the thermometer are provided, it is possible to easily confirm whether water in the heat treatment unit 2a is high-pressure hot water.

The polymer resin recovery apparatus of the present invention may include a hot water supply unit 3 to supply hot water to the heat treatment unit 2a, and a discharge unit 4 capable of discharging the melted polymer resin. FIG. 4 is a schematic view showing a polymer resin recovery apparatus 13 having a hot water supply unit 3 and a discharge unit 4. The embodiments regarding the heat treatment unit 2a, the separation unit 2b, the first filter member 21, the water flow generator 8, the stirring blade 81, and the motor 141 of the polymer resin recovery apparatus 13 illustrated in FIG. 4 are the same as those of the polymer resin recovery apparatus 12 illustrated in FIG. 3. The arrows in the flow path of the polymer resin recovery apparatus 13 of the illustrated example indicate the flow direction of water. Since the polymer resin recovery apparatus 13 has the discharge unit 4, there is no need to separately extract the solidified polymer resin 62 from the heat treatment unit 2a, and the polymer resin 62 can be recovered more easily. Furthermore, the polymer resin recovery apparatus 13 having the hot water supply unit 3 and the discharge unit 4 can be further provided with a back pressure valve, whereby the pressure in the heat treatment unit 2a can be adjusted by the back pressure valve so that the hot water in the heat treatment unit 2a becomes high-pressure hot water.

In the polymer resin recovery apparatus 13, heat treatment can be performed while hot water is supplied into the heat treatment unit 2a and/or while the melted polymer resin and high-pressure hot water are discharged from the heat treatment unit 2a. The heat treatment can also be performed, with a valve 123 provided in the hot water supply unit 3 and a valve 124 provided in the discharge unit 4 closed, after hot water is supplied into the heat treatment unit 2a. When the heat treatment is performed while hot water is supplied into the heat treatment unit 2a, a pump 82 for supplying the hot water also acts as the water flow generator 8. Specifically, hot water to be supplied to the heat treatment unit 2a can be prepared by heating water contained in a water storage tank 9 using a heating mechanism 73 (such as a heater) provided in a hot water preparation mechanism 7a, as illustrated in FIG. 4. As illustrated in FIG. 4, it is preferable to provide a check valve 131 upstream of the hot water supply unit 3, since this prevents backflow of the treatment liquid containing the melted polymer resin. In particular, when a backwashing mechanism described later is provided, it is preferable to provide a check valve 131.

When the flow direction of a water flow generated by the water flow generator 8 is upward, the discharge unit 4 may be configured to discharge the melted polymer resin and high-pressure hot water from the heat treatment unit 2a by overflow. Alternatively, a pump may be provided downstream of the discharge unit 4 so that the melted polymer resin and high-pressure hot water are discharged from the heat treatment unit 2a by the pump or the like.

In the polymer resin recovery apparatus 13 illustrated in FIG. 4, the heating mechanism 23 capable of heating the heat treatment unit 2a is specifically a jacket provided around the outer periphery of the heat treatment unit 2a. When the heating mechanism 23 is a jacket, the jacket can also be designed to function as a cooling mechanism by replacing a heating medium flowing inside the jacket with a cooling medium. The polymer resin recovery apparatus 13 has a cooling mechanism 5 as a container (specifically, a jacket tank) separate from the heat treatment unit 2a. The polymer resin recovery apparatus may have the cooling mechanism 5 in the heat treatment unit 2a or separately from the heat treatment unit 2a. However, when the polymer resin recovery apparatus has the discharge unit 4, from the viewpoints of recovery efficiency and suppression of deterioration of the polymer resin 62, it is preferable that the cooling mechanism 5 be provided separately from the heat treatment unit 2a, and it is more preferable that a container-type (such as a jacket tank) cooling mechanism 5 be provided separately from the heat treatment unit 2a. In the cooling mechanism 5 of the polymer resin recovery apparatus 13, the melted polymer resin flowing in from the discharge unit 4 is cooled and solidified.

When the cooling mechanism 5 is of a container-type, a recovery unit 6 to recover the solidified polymer resin 62 may be a container-type inner tank contained in the container that is the cooling mechanism 5. In the recovery unit 6, the polymer resin may be recovered by naturally precipitating the solidified polymer resin 62 or by separating the solidified polymer resin 62 with a filter member (a second filter member described later). The recovery unit 6 may be a centrifugal separator, and the centrifugal separator may be equipped with a standard cooling mechanism 5. The polymer resin recovery apparatus 13 has a jacket tank composed of the cooling mechanism 5 that is a jacket and the recovery unit 6 that is an inner tank, and the solidified polymer resin 62 is naturally precipitated in the recovery unit 6, and water is discharged by overflowing from the recovery unit 6, thereby recovering the polymer resin 62. In the polymer resin recovery apparatus 13, the overflow discharge is performed by a valve 125. When the recovery unit 6 is of a container-type and is configured to recover the solidified polymer resin 62 by natural precipitation, the polymer resin recovery apparatus can be an easy-to-maintain apparatus. When the recovery unit 6 is of a container-type and is configured to recover the solidified polymer resin 62 by natural precipitation, a flow-regulating wall may be provided in the recovery unit 6 from the viewpoint of efficient recovery of the polymer resin 62. Water may be discharged from the recovery unit 6 by a pump, but from the viewpoint of ease of maintenance of the apparatus, it is preferable to discharge the water by overflow.

The polymer resin recovery apparatus 13 is provided with a recovered water storage tank 91 and is configured to store water discharged from the recovery unit 6. The configuration that allows water discharged from the recovery unit 6 to be stored makes it easy to reuse the water. For example, the recovered water storage tank 91 can be connected to the water storage tank 9 or the heat treatment unit 2a by a pipe, and the recovered water can be reused to recover a polymer resin. When the recovered water is to be reused, the polymer resin recovery apparatus preferably has a configuration (filter member, centrifuge, or the like) that performs a treatment such as filtration and separation of the recovered water before reuse. Even when water in the recovered water storage tank 91 is not reused but is discharged, it is preferable to have a configuration (filter member, centrifuge, or the like) that performs an appropriate treatment such as filtration and separation, from the viewpoints of environmental protection and the like.

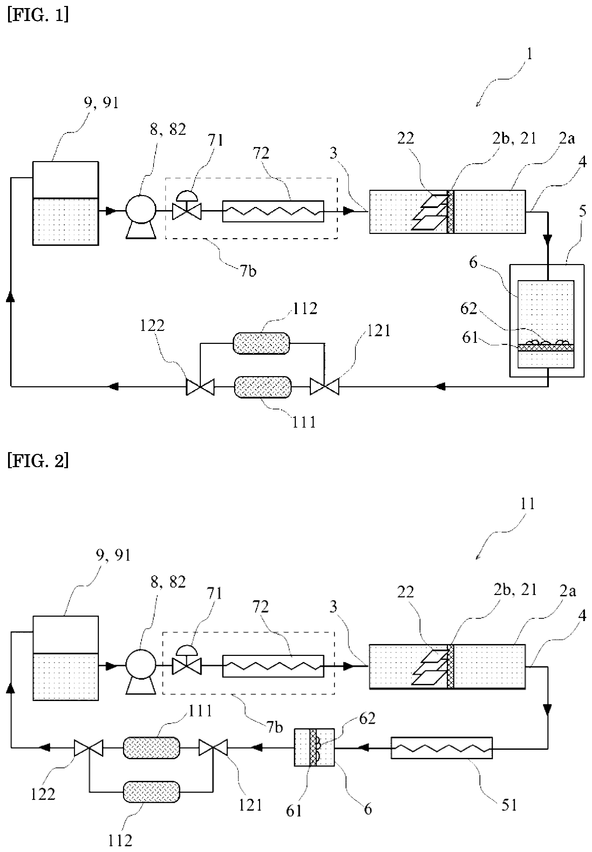

FIG. 1 is a schematic view showing another example of a polymer resin recovery apparatus of the present invention for performing a method in which a melted polyamide/polyester (polymer resin) in a heat treatment liquid is separated in a melted state from solid matter (such as a silicone resin) by filtration and recovered. The arrows in the flow path of the polymer resin recovery apparatus 1 of the illustrated example indicate the flow direction of water. The polymer resin recovery apparatus 1 of the illustrated example includes a container-type heat treatment unit 2a that accommodates a composite material 22, a water flow generator 8 and a hot water supply unit 3 that are provided upstream of the heat treatment unit 2a, and a discharge unit 4, a cooling mechanism 5, and a recovery unit 6 that are provided downstream of the heat treatment unit 2a. A separation unit 2b having a first filter member 21 is provided in the heat treatment unit 2a, and a second filter member 61 is provided in the recovery unit 6.

The heat treatment unit 2a is a device that treats the composite material 22 (for example, airbag fabric, etc.) with high-pressure hot water flowing inside the device. This treatment causes a polymer resin (such as polyamide/polyester) to melt in the water, while the other components (such as a silicone resin) do not melt and remain as solid matter. The high-pressure hot water flows through inside the heat treatment unit 2a by a water flow generated by a water flow generator 8 that is a pump. The first filter member 21 of the separation unit 2b provided in the heat treatment unit 2a holds the composite material 22 in the water and separates the melted polymer resin and the solid matter (specifically, the composite material 22 and unmelted matter in the heat treatment). The polymer resin is discharged from the discharge unit 4 together with the high-pressure hot water. After being discharged, the polymer resin and the high-pressure hot water are cooled by a cooling mechanism 5, and the polymer resin solidifies in the water. The recovery unit 6 is a device that separates the solidified polymer resin 62 from the cooled water and recovers the polymer resin 62. The solidified polymer resin 62 is separated by filtration by a second filter member 61 provided in the recovery unit 6. In the example shown in FIG. 1, a container-type cooling mechanism 5 (for example, a jacket tank) is employed as a cooling mechanism, and a container-type recovery unit 6 is housed within the cooling mechanism 5. Therefore, even if a large amount of the polymer resin is solidified by the cooling mechanism 5, the risk of line blockage is reduced.

The polymer resin recovery apparatus 1 illustrated in FIG. 1 is equipped with the hot water supply unit 3 and the water flow generator 8 for supplying high-pressure hot water to the heat treatment unit 2a so that the high-pressure hot water can flow through inside the heat treatment unit 2a from the hot water supply unit 3 toward the discharge unit 4. Even when the high-pressure hot water is allowed to flow through, the movement of the composite material 22 is restricted by the first filter member 21 of the separation unit 2b provided in the heat treatment unit 2a (that is, the first filter member 21 acts as an underwater holding member for holding the composite material 22 in the water, and the composite material 22 is held in the heat treatment unit 2a), and thus the composite material 22 can be continuously treated with high-pressure hot water, thereby further improving treatment efficiency.

In the polymer resin recovery apparatus 1 illustrated in FIG. 1, a high-pressure hot water preparation mechanism 7b to generate high-pressure hot water is connected to the hot water supply unit 3 so that high-pressure hot water can be supplied from the hot water supply unit 3. The high-pressure hot water preparation mechanism 7b is composed of a pressure adjustment mechanism 71 and a heating mechanism 72. In the illustrated example, the heating mechanism 72 is a heater, and can be monitored by a thermometer (not shown). The pressure adjustment mechanism 71 in the illustrated example is a pressure adjustment valve equipped with a pressure controller (not shown), and can be monitored by a pressure gauge (not shown).

In the polymer resin recovery apparatus 1 illustrated in FIG. 1, a liquid after removing the polymer resin 62 in the recovery unit 6 is allowed to pass through residue removal filters 111 and 112 as necessary to remove fine residues, and then can be stored in the water storage tank 9. Therefore, the filtrate obtained by filtering out the polymer resin 62 can be appropriately treated in the water storage tank 9 and then removed as wastewater. The polymer resin recovery apparatus 1 illustrated in FIG. 1 has three-way valves 121 and 122 on the respective upstream and downstream sides of the residue removal filters 111 and 112. By appropriately switching between the flow paths of the valves 121 and 122, it is possible to switch between a mode of flowing through only the residue removal filter 111 and a mode of flowing through only the residue removal filter 112. Therefore, by switching the residue removal filters through which the liquid flows before the residue removal filters become clogged, the residue removal filter on the side where the flow has been stopped can be appropriately treated (replaced, cleaned, or the like) while the apparatus is in continuous operation. In the illustrated example, water stored in the water storage tank 9 can also be used as raw water for high-pressure hot water. Specifically, water stored in the water storage tank 9 can be sent to the high-pressure hot water preparation mechanism 7b by a liquid feeding device (a pump 82 in the illustrated example).

In the polymer resin recovery apparatus 1 of the present invention, high-pressure hot water is allowed to flow through the composite material 22 to be brought into contact with the composite material 22, the melted polymer resin is not retained in the heat treatment unit 2a but is separated in the separation unit 2b by the water flow, and is then discharged from the heat treatment unit 2a and subsequently cooled and solidified by the cooling mechanism 5, whereby the time for which the polymer resin is exposed to high pressure and high temperature can be shortened. Therefore, deterioration of the recovered polymer resin 62 can be further effectively reduced. Furthermore, since a water flow is used to move the polymer resin from the heat treatment unit 2a to the recovery unit 6, the polymer resin 62 can be separated and recovered from the composite material 22 easily without any complicated operations.

In a batch-type hydrolysis apparatus such as that disclosed in Patent Document 1, even if an attempt is made to shorten the time for which a material to be treated is exposed to high pressure and high temperature, it also takes time to raise the temperature/pressure and drop the temperature/pressure of the treatment tank accommodating the material to be treated, and it is not possible to achieve the same short time as that achieved by the apparatus of the present invention. For this reason, in a batch-type hydrolysis apparatus such as that disclosed in Patent Document 1, deterioration (such as hydrolysis) of a polymer resin progresses even during the temperature rise/pressure rise and the temperature drop/pressure drop, and it is difficult to recover a polymer resin suitable for material recycling.

In the polymer resin recovery apparatus of the present invention, the recovery unit may be provided separately from the cooling mechanism. FIG. 2 is a schematic view showing a polymer resin recovery apparatus 11 in which the recovery unit 6 is provided separately from the cooling mechanism 51. The embodiments other than the recovery unit 6 and the cooling mechanism 51 of the polymer resin recovery apparatus 11 illustrated in FIG. 2 are the same as those of the polymer resin recovery apparatus 1 illustrated in FIG. 1. The arrows in the flow path of the polymer resin recovery apparatus 11 of the illustrated example indicate the flow direction of water. In the polymer resin recovery apparatus 11, a flow path-type cooling mechanism 51 (for example, a multi-tube heat exchanger) is provided upstream of the recovery unit 6. By providing the cooling mechanism 51 upstream of the recovery unit 6, the polymer resin can be more reliably solidified before passing through the recovery unit 6, and the efficiency of recovering the polymer resin can be improved. The polymer resin recovery apparatus of the present invention may have a first cooling mechanism upstream of the recovery unit and a second cooling mechanism housing the recovery unit. By providing the first and second cooling mechanisms, the polymer resin can be recovered more efficiently.

The recovery of a polymer resin using the polymer resin recovery apparatus of the present invention has high heat treatment efficiency, and thus it is possible to reduce a treatment time required for the heat treatment and to suppress deterioration of the polymer resin 62. Furthermore, in the recovery of a polymer resin using the polymer resin recovery apparatus of the present invention, since the presence of the separation unit 2b allows the melted polymer resin to be separated from the composite material 22 and matter unmelted in the heat treatment, the polymer resin 62 can be easily recovered. If the melted polymer resin is not separated in the separation unit 2b, the polymer resin 62 solidified by cooling may be in a state of adhering to the unmelted matter, and the recovery operation may be complicated. Furthermore, in the recovery of a polymer resin using the polymer resin recovery apparatus of the present invention, it is possible to recover the polymer resin 62 without the need to apply alkali treatment to the composite material 22 (for example, airbag fabric, etc.). This makes it possible to avoid deterioration of the polymer resin 62 caused by alkali treatment, and also makes it possible to easily separate and recover the polymer resin 62 from the composite material 22 without any complicated operations.

The polymer resin recovery apparatuses 12 and 13 are preferable from the viewpoints of ease in maintenance and obtaining a polymer resin 62 with suppressed deterioration simply and efficiently, and the polymer resin recovery apparatuses 1 and 11 are preferable from the viewpoint of efficiently obtaining a polymer resin 62 with suppressed deterioration in a shorter time.

In the polymer resin recovery apparatus of the present invention, the heat treatment unit and the recovery unit may each independently be of a container-type or a cylindrical-type. The heat treatment unit 2a is preferably pressure resistant, and preferably has an internal volume of 0.5 L to 3000 L, more preferably 1 L or more, even more preferably 2 L or more, and still more preferably 5 L or more, and is more preferably 1500 L or less, even more preferably 1200 L or less, still more preferably 1000 L or less, and still further preferably 800 L or less. That is, the internal volume of the heat treatment unit 2a is more preferably 1 L to 1500 L, even more preferably 2 L to 1200 L, still more preferably 5 L to 1000 L, and still further preferably 5 L to 800 L. When the internal volume of the heat treatment unit 2a is within the above range, the polymer resin 62 can be recovered from the composite material 22 more efficiently.

The heat treatment unit 2a is preferably of a container-type as illustrated in FIG. 1 to FIG. 4, and more preferably a pressure container since the heat treatment is performed using high-pressure hot water therein. When the heat treatment unit 2a is of a container-type, it may be a vertical container or a horizontal container, and may have a lid capable of closing an opening of the container. In order to improve the efficiency of the heat treatment, a vertical container is preferable in a configuration in which the flow direction of a water flow generated by the water flow generator 8 is mainly upward or downward, and a horizontal container is preferable in a configuration in which the flow direction of a water flow generated by the water flow generator 8 is mainly horizontal. When the heat treatment unit 2a is of a container-type and has a cylindrical shape, in order to concentrate a water flow generated by the water flow generator 8 in one direction, the ratio of the length to the diameter of the container is preferably such that, when the diameter of the container is assumed to be 1, the length of the container is 2 times or more the diameter, more preferably 3 times or more, even more preferably 3.5 times or more, still more preferably 4 times or more, particularly preferably 4.5 times or more, and most preferably 5 times or more. There is no particular upper limit to the ratio of the length to the diameter of the container, but in the case of a container equipped with a stirring blade or a tank-shaped container, the ratio may be 10 times or 20 times. In this case, the container may be either vertical or horizontal, but in the case of a container equipped with a stirring blade, a vertical container is preferred. The heat treatment unit 2a may be a tubular container such as a tube reactor or a reaction tube. In the case of a tubular container, the above upper limit may be 100 times, 300 times, 500 times, or 1000 times. In the case of a tubular container, it is preferable that the container have a U-shape, an N-shape, a Z-shape, or a bent shape that repeats these shapes, or a coil shape or spiral shape. In the case of a vertical container with an ellipsoidal bottom, the length of the container is a length from the bottommost part to a water level surface, and the diameter of the container is a diameter of the portion from the part excluding the bottom part to the water level surface. When the diameter of the container gradually increases or decreases, or when the container is barrel-shaped or incomplete cylindrical-shaped, the diameter of the container is an arithmetic mean diameter. In the case of a tubular container, the diameter and length of the container refer to the diameter and length of the tube.

Furthermore, when the water flow generator 8 such as a stirring blade is located in the container of the heat treatment unit 2a, the relationship between the distance between the water flow generator 8 and the first filter member 21 and the diameter of the container, or when the water flow generator 8 such as a pump is located outside the container of the heat treatment unit 2a, the relationship between the distance between an inlet for introducing a water flow into the container of the heat treatment unit 2a and the first filter member 21 and the diameter of the container is preferably the ratio of the length to the diameter of the container, with these distances being interpreted as the length of the container. The above-mentioned distances are each a distance between the two closest points. By satisfying the above relationship, it is possible to obtain a stable water flow that is concentrated in one direction.

In each of the polymer resin recovery apparatuses 1 and 11, the heat treatment unit 2a is provided with an opening A (not shown) upstream of the first filter member 21 and a lid A (not shown) capable of openably and closably sealing the opening A, and a material to be treated (composite material 22) can be introduced and recovered through the opening A. The heat treatment unit 2a itself may be configured to be detachable from the polymer resin recovery apparatuses 1 and 11, and such a configuration allows the composite material 22 to be introduced and recovered more easily.

The composite material 22 to be introduced into the heat treatment unit 2a may be introduced in its original shape, but from the viewpoint of the efficiency of the heat treatment, in a case where the size is more than 2500 cm², it is preferable to cut or crush the composite material 22 to be within the range of 1 mm² to 2500 cm² before introduction. The size (particularly, the maximum surface area) of the composite material 22 is more preferably 25 mm² or more, even more preferably 1 cm² or more, and still more preferably 10 cm² or more, and is more preferably 1500 cm² or less, and even more preferably 1000 cm² or less. That is, the size of the composite material 22 is more preferably 25 mm² to 1500 cm², even more preferably 1 cm² to 1000 cm², and still more preferably 10 cm² to 1000 cm².

Furthermore, from the viewpoint of the efficiency of the heat treatment, the size of the composite material 22 is preferably within the range of 1 mm to 500 mm in length and 1 mm to 500 mm in width, and more preferably within the range of 5 mm to 450 mm in length and 5 mm to 450 mm in width.

The shape of the composite material 22 is not particularly limited, and may be a quadrilateral shape such as a rectangle or a square, a circle, an ellipse, another polygonal shape, or an irregular shape. From the viewpoint of ease of handling, it is preferable that the shape of the composite material 22 be a quadrilateral shape.

In the present invention, high-pressure hot water refers to water having a temperature of 100 °C or higher and a pressure equal to or more than the saturated water vapor pressure at that temperature. The temperature and pressure of the high-pressure hot water may be any temperature and pressure at which the polymer resin contained in the composite material 22 can be melted.

When the composite material 22 contains polyamide/polyester as a polymer resin, the temperature of high-pressure hot water during heat treatment in the heat treatment unit 2a (namely, the treatment temperature of the composite material 22; in the polymer resin recovery apparatuses 1 and 11, the temperature of high-pressure hot water flowing through the heat treatment unit 2a) is preferably 160 °C or higher, more preferably 170 °C or higher, even more preferably 175 °C or higher, still more preferably 180 °C or higher, further preferably 185 °C or higher, still further preferably 188 °C or higher, and particularly preferably 190 °C or higher. From the viewpoint of suppression of deterioration of the polymer resin, the temperature of high-pressure hot water during heat treatment in the heat treatment unit 2a is preferably 250 °C or lower, more preferably 240 °C or lower, even more preferably 235 °C or lower, and still more preferably 230 °C or lower. That is, the temperature of the high-pressure hot water is preferably 160 °C to 250 °C, more preferably 170 °C to 240 °C, even more preferably 175 °C to 235 °C, still more preferably 180 °C to 230 °C, further preferably 185 °C to 230 °C, still further preferably 188 °C to 230 °C, and particularly preferably 190 °C to 230 °C. When the temperature of the high-pressure hot water is within the above range, the polymer resin 62 with suppressed deterioration can be recovered with high efficiency.

When the composite material 22 contains polyamide/polyester as a polymer resin, the pressure of high-pressure hot water during heat treatment in the heat treatment unit 2a (namely, the treatment pressure of the composite material 22; in the polymer resin recovery apparatuses 1 and 11, the pressure of high-pressure hot water flowing through the heat treatment unit 2a) is preferably 1.0 MPa to 4.0 MPa, more preferably 1.1 MPa or more, and even more preferably 1.2 MPa or more, and is more preferably 3.6 MPa or less, even more preferably 3.3 MPa or less, still more preferably 3.0 MPa or less, and still further preferably 2.8 MPa or less. That is, the pressure of the high-pressure hot water is more preferably 1.1 MPa to 3.6 MPa, even more preferably 1.2 MPa to 3.3 MPa, still more preferably 1.2 MPa to 3.0 MPa, and still further preferably 1.2 MPa to 2.8 MPa. When the pressure of the high-pressure hot water is within the above range, the polymer resin 62 with suppressed deterioration can be recovered with high efficiency.

By setting the temperature and the pressure as described above, the composite material 22 such as an airbag fabric can be heat-treated under a pressure equal to or more than the saturated water vapor pressure, and the composite material 22 can be heat-treated while being entirely immersed in water by an underwater holding member, such as the first filter member 21, and the polymer resin can be efficiently recovered.

When the composite material 22 contains a polyamide-based resin (particularly, nylon 66) as a polymer resin, from the viewpoints of improvement in the recovery rate of the polymer resin 62 and suppression of deterioration of the polymer resin 62, it is preferable that the temperature of high-pressure hot water during heat treatment in the heat treatment unit 2a be 180 °C to 240 °C and that the pressure of high-pressure hot water during heat treatment in the heat treatment unit 2a be 1.0 MPa to 3.6 MPa. When the composite material 22 contains a polyester-based resin (particularly, polyethylene terephthalate) as a polymer resin, from the viewpoints of improvement in the recovery rate of the polymer resin 62 and suppression of deterioration of the polymer resin 62, it is preferable that the temperature of high-pressure hot water during heat treatment in the heat treatment unit 2a be 210 °C to 240 °C and that the pressure of high-pressure hot water during heat treatment in the heat treatment unit 2a be 2.0 MPa to 3.6 MPa.

The heat treatment unit 2a is preferably provided with a thermometer and a pressure gauge (both not shown) capable of measuring the temperature and the pressure, respectively, within the heat treatment unit 2a. The heat treatment unit 2a may also have a temperature control mechanism for maintaining the temperature inside the heat treatment unit 2a constant, for example, by attaching a jacket to the outside. The heat treatment unit 2a particularly preferably has a jacket as the heating mechanism 23.

When high-pressure hot water is allowed to flow through inside the heat treatment unit 2a during heat treatment in the heat treatment unit 2a, the flow rate of the high-pressure hot water in the heat treatment unit 2a may be appropriately set depending on the volume of the heat treatment unit 2a, but is preferably 0.01 L/min to 1000 L/min, more preferably 0.1 L/min to 800 L/min, and even more preferably 0.5 L/min to 500 L/min. When the flow rate of the high-pressure hot water is within the above range, the polymer resin 62 with further suppressed deterioration can be recovered with high efficiency.

The flow rate of the high-pressure hot water in the heat treatment unit 2a can be adjusted, for example, by a liquid feeding device (for example, a pump 82). When high-pressure hot water is allowed to flow through inside the heat treatment unit 2a during heat treatment in the heat treatment unit 2a, the heat treatment unit 2a is preferably a vertical container from the viewpoint of reduction in energy consumption.

The separation unit 2b may be provided at or downstream of the heat treatment unit 2a (in other words, the separation unit 2b may be provided in the heat treatment unit 2a), and when the heat treatment unit 2a is of a container-type, the separation unit 2b is preferably provided inside the heat treatment unit 2a. By providing the separation unit 2b including the first filter member 21 inside the heat treatment unit 2a, it becomes easy to hold the entire composite material 22 in high-pressure hot water inside the heat treatment unit 2a during heat treatment. That is, the first filter member 21 also functions as an underwater holding member that holds the composite material 22 in high-pressure hot water. When the entire composite material 22 is held in high-pressure hot water during the heat treatment, the composite material 22 and the unmelted matter are retained in the high-pressure hot water by the first filter member 21, while the polymer resin in a melted state is released from the composite material 22, flows with a water flow generated by the water flow generator 8, and passes through the first filter member, thereby being more easily separated. Therefore, the polymer resin can be separated and recovered from the composite material 22 more simply and efficiently, and furthermore, it is possible to suppress deterioration of the recovered polymer resin 62.

The flow rate of a water flow to be sent to the separation unit 2b may be appropriately set depending on the volume of the separation unit 2b or the like, and is preferably 0.01 L/min to 1000 L/min, more preferably 0.1 L/min to 800 L/min, and even more preferably 0.5 L/min to 500 L/min. When the flow rate of the water in the separation unit 2b is within the above range, the polymer resin 62 with suppressed deterioration can be recovered more efficiently.

The flow rate of the water flow in the separation unit 2b can be adjusted, for example, by a liquid feeding device (for example, a pump 82).

The shape of the first filter member 21 provided in the separation unit 2b is not particularly limited, and may be, for example, a plate shape, a bucket shape, or a cartridge shape. The composite material 22 may be housed inside a basket-shaped container having a lid, and at least a part of the basket-shaped container may serve as the first filter member 21.

When a water surface of high-pressure hot water exists inside the heat treatment unit 2a during heat treatment, and a water flow is generated toward the water surface, it is preferable that the first filter member 21 be fitted inside the heat treatment unit 2a so as to partition the heat treatment unit 2a into an upper section of the heat treatment unit 2a where the water surface exists and a lower section of the heat treatment unit 2a where high-pressure hot water exists throughout.

When the first filter member 21 is provided in the heat treatment unit 2a, it is preferable that the first filter member 21 be detachable from and attachable to the heat treatment unit 2a from the viewpoint of ease of maintenance and operation. The first filter member 21, for example, may be attached and detached through the opening A of the heat treatment unit 2a, or an opening B separate from the opening A and a lid B capable of openably and closably sealing the opening B may be attached to the heat treatment unit 2a to make the first filter member 21 detachable from and attachable to the heat treatment unit 2a through the opening B. When the first filter member 21 is detachable and attachable, the configuration (such as the size of through holes) of the first filter member 21 can be easily changed, and ease of cleaning of the polymer resin recovery apparatuses 1, 11, 12, and 13 is also improved.

The first filter member 21 has a plurality of through holes (A). The size per one through hole (A) of the first filter member 21 is a size that does not allow the composite material 22 to pass through but allows the high-pressure hot water and the melted polymer resin to pass through. Specifically, the opening area per one through hole (A) of the first filter member 21 is preferably 0.001 mm² to 200 cm², more preferably 0.05 mm² to 200 cm², even more preferably 0.1 mm² to 100 cm², and still more preferably 0.3 mm² to 50 cm². Furthermore, the opening area per one through hole (A) of the first filter member 21 is, with respect to the area of the composite material 22 to be treated, preferably 0.01% to 25%, more preferably 0.05% to 25%, even more preferably 0.1% to 20%, still more preferably 0.1% to 15%, and still further preferably 0.2% to 10%, and may be 0.01% to 10% (preferably 0.05% to 10%, more preferably 0.1% to 10%, and even more preferably 0.2% to 10%). The mesh size of the first filter member 21 is preferably 0.01 mm to 100 mm, more preferably 0.05 mm to 50 mm, even more preferably 0.08 mm to 25 mm, and still more preferably 0.1 mm to 13 mm. For example, when the area of the composite material 22 is 1600 mm², the size per one through hole (A) of the first filter member 21 is preferably 0.4 mm to 13 mm. When a plurality of composite materials 22 are treated at once, the above-mentioned area of the composite material 22 is the mean value of the areas of the composite materials 22 used.

Of the plurality of through holes (A) of the first filter member 21, the proportion of the number of through holes (A) having an opening area within the above range is preferably 60% to 100%, more preferably 80% to 100%, and even more preferably 90% to 100%.

The total opening area, which is the sum of the opening areas of the plurality of through holes (A) of the first filter member 21, is preferably 30% to 95%, more preferably 40% to 93%, and even more preferably 50% to 90% with respect to the area of the filtering surface including the through holes (A) of the first filter member 21.

The size of the first filter member 21 is not particularly limited, and may be set appropriately based on the opening area of the separation unit 2b. For example, when the separation unit 2b is provided inside the heat treatment unit 2a, the size of the first filter member 21 need only be such that, when the first filter member 21 is placed inside the heat treatment unit 2a, the composite material 22 does not pass through a gap between the inner wall of the heat treatment unit 2a and the first filter member 21. More specifically, it is preferable that the area of the filtering surface including the through holes (A) of the first filter member 21 be 80% to 100%, more preferably 90% to 100%, and even more preferably 97% to 100%, with respect to the cross-sectional area of the heat treatment unit 2a at a location where the first filter member 21 is attached.

The thickness of the first filter member 21 is not particularly limited. For example, the lower limit of the thickness of the first filter member 21 may be set such that the first filter member 21 does not cause deformation due to the flow-through of high-pressure hot water, and the upper limit of the thickness of the first filter member 21 may be set such that a melted polymer resin can easily pass through.

As a material for the first filter member 21, metals such as silicon, aluminum, nickel, tungsten, copper, titanium, and stainless steel are preferred from the viewpoints of heat resistance, pressure resistance, durability, and the like, and aluminum and stainless steel are more preferred. A material for the first filter member 21 may also be a metal material on which plating treatment with zinc, chromium, nickel, or the like has been performed. In order to reduce adhesiveness to the polymer resin and improve separation efficiency, the first filter member may have a surface that has been applied with a fluororesin coating such as Teflon (registered trademark) coating. A metal material for the first filter member is particularly preferably aluminum, from the viewpoints of heat resistance, pressure resistance, durability, low adhesiveness to a polymer resin, and high-efficiency separation.

Examples of the first filter member 21 include metal filters such as a metal mesh, a punched metal plate, and a sintered body of metal particles or flakes.

The separation unit 2b may be provided with a plurality of filter members. For example, it is preferable to provide a plurality of filter members with different opening areas and arrange them so that the polymer resin passes through them in multiple stages. By allowing the polymer resin to pass through a filter member with a large opening area and then pass through a filter member with a small opening area, clogging of the filter members is less likely to occur, and the polymer resin can be recovered more efficiently.

Although not shown, each of the polymer resin recovery apparatuses 1, 11, 12, and 13 may have a backwashing mechanism for backwashing the first filter member 21. The backwash mechanism may be configured to cause a water flow in a direction substantially opposite to the flow direction of the water flow generated in the water flow generator 8 to impinge on the first filter member 21, and may be composed of, for example, a pump for supplying backwash water and a pipe, or may be composed of a pressurized gas storage tank for applying pressure using gas or the like and a pipe. When the backwashing mechanism is provided, it is possible to suppress a decrease in the separation efficiency of the first filter member 21 and or suppress clogging of the first filter member 21 during recovery of the polymer resin.

The water flow generator 8 may be configured to generate a water flow, and may be, for example, a conventional stirring device such as a stirring blade, a magnetic stirrer, or a mechanical stirrer, which generates a water flow by stirring. The water flow generator 8 may generate a water flow by introducing a fluid (such as water or hot water) into the separation unit 2b with a pump and a pipe. Examples of the stirring blade include a propeller blade, a paddle blade, a turbine blade, an anchor blade, and a ribbon blade. A stirring blade having an inclined paddle can be suitably used because it can generate a water flow in substantially one direction. FIG. 3 shows an embodiment in which the water flow generator 8 is a stirring blade 81, FIG. 1 and FIG. 2 each show an embodiment in which the water flow generator 8 is a pump 82, and FIG. 4 shows an embodiment in which the water flow generator 8 is a stirring blade 81 and a pump 82. It is preferable to provide a stirring blade or a pump as the water flow generator 8, and more preferable to provide at least a stirring blade as the water flow generator 8. When the separation unit 2b is arranged inside the heat treatment unit 2a, and a stirring blade 81 is provided as the water flow generator 8, it is preferable that the stirring blade 81 serving as the water flow generator 8 be arranged inside the heat treatment unit 2a, as illustrated in FIG. 3 and FIG.4. In FIG. 3 and FIG. 4, the stirring shaft of the stirring blade 81 is inserted from the bottom of the container of the heat treatment unit 2a, but the stirring shaft may also be inserted from the lid of the container (from the top). In this case, the stirring blade may be located above the first filter member 21, or the stirring shaft may penetrate the first filter member 21, so that the stirring blade may be located below the first filter member 21.

Generally, as the volume and diameter of the heat treatment unit 2a are larger, a larger stirring blade is used. However, it is preferable that the ratio of the maximum diameter of the range of rotation when the stirring blade is rotated to the diameter of the container be 0.1 to 0.95. This ratio is more preferably 0.2 or more, even more preferably 0.3 or more, and may be 0.4 or more, or 0.5 or more. This ratio may also be 0.9 or less, or 0.85 or less.

When the separation unit 2b is arranged inside the heat treatment unit 2a, and a pump 82 is provided as the water flow generator 8, a pipe connecting the pump 82 and the heat treatment unit 2a (separation unit 2b) may serve as the hot water supply unit 3, or the pipe may be provided separately from the hot water supply unit 3, as illustrated in FIG. 1 to FIG. 3. When the separation unit 2b is arranged inside the heat treatment unit 2a, and a pump 82 is provided as the water flow generator 8, a fluid flowing into the heat treatment unit 2a (separation unit 2b) may be hot water extracted from the heat treatment unit 2a (separation unit 2b). That is, as illustrated in FIG. 1 and FIG. 2, a configuration in which hot water is circulated may also be used. The hot water may be extracted from a discharge unit for extracting only the hot water, or may be extracted via a discharge unit 4 for extracting the melted polymer resin and the hot water. When the hot water extracted through the discharge unit 4 is allowed to flow into the heat treatment unit 2a (separation unit 2b), it is preferable to have a structure (for example, a recovery unit 6) for removing the polymer resin downstream of the discharge unit 4 and upstream of the pump 82.

The flow direction of the water flow generated by the water flow generator 8 can be any direction, such as an upward direction, a downward direction, or a lateral direction. The water flow generator 8 may be installed so as to generate a water flow in a desired direction, taking into consideration the shape of the heat treatment unit 2a where the heat treatment is performed, the shape of the separation unit 2b, and the like. The water flow generator 8 may be configured so that the flow direction of the water flow can be changed. For example, when the water flow generator 8 is a pump 82, an angle-variable nozzle can be provided on the heat treatment unit 2a (separation unit 2b) side of the pipe connecting the pump 82 and the heat treatment unit 2a (separation unit 2b). From the viewpoints of the stability of the water flow and the separation efficiency of the polymer resin 62, the water flow generator 8 is preferably configured to generate a water flow in an upward direction. The upward direction does not necessarily have to be a completely vertical direction (anti-gravity direction), but may be an obliquely upward direction. In the case of the obliquely upward direction, the inclination with respect to the horizontal direction (a direction perpendicular to the gravity direction) is preferably 20 degrees or more, more preferably 30 degrees or more, even more preferably 40 degrees or more, and particularly preferably 50 degrees or more, 60 degrees or more, 70 degrees or more, and 80 degrees or more in order of increasing preference. When the water flow is a vortex (swirling flow) generated by stirring or the like, it is preferable that the direction of the entire vortex (swirling flow) be upward.

The velocity of the water flow (water flow velocity) generated by the water flow generator 8 is preferably 0.001 m/s to 1 m/s, more preferably 0.002 m/s to 1 m/s, and even more preferably 0.01 m/s to 0.5 m/s. When the water flow velocity is within the above range, the polymer resin 62 can be recovered more efficiently.

When the water flow generator 8 is a stirring blade, the rotation speed of the stirring blade is preferably 1 to 3000 rpm, more preferably 10 to 3000 rpm, and even more preferably 20 to 2000 rpm, depending on the volume (container size) of the heat treatment unit 2a, the diameter of the container, the ratio of the length to the diameter of the container, and the shape and the size of the stirring blade. To ensure a stable and uniform water flow, it is preferable to lower the rotation speed as the stirring blade is larger, the container is larger, the length relative to the diameter of the container is shorter, and the stirring blade is larger relative to the diameter of the container. For example, when the volume of the container of the heat treatment unit 2a is 100 L or more, the rotation speed of the stirring blade is preferably 1 to 500 rpm, more preferably 5 to 300 rpm, even more preferably 10 to 200 rpm, and most preferably 20 to 100 rpm, depending on the shape of the stirring blade. When the rotation speed of the stirring blade is within the above range, the polymer resin 62 can be recovered more efficiently.

The heating mechanism 23, which the heat treatment unit 2a may include, may be configured to heat the heat treatment unit 2a from the outside or from the inside. When the heating mechanism 23 is configured to heat the heat treatment unit 2a from the outside, examples of the heating mechanism 23 include a jacket, an electric heating wire (heater), and an induction heating device. When the heating mechanism 23 is configured to heat the heat treatment unit 2a from the inside, examples of the heating mechanism 23 include an immersion heater and a steam introduction device. The heating mechanism 23 is preferably configured to heat the heat treatment unit 2a from the outside, and is more preferably a jacket or a heater from the viewpoint of ease of device handling. The jacket allows a heating medium to flow in the inside thereof, and can also function as a cooling mechanism by allowing a cooling medium to flow in the inside thereof. The heating mechanism 23 may be installed so as to heat the entire heat treatment unit 2a, or so as to heat a part of the heat treatment unit 2a. From the viewpoint of heating efficiency, it is preferable to install the heating mechanism 23 so as to heat at least the bottom of the heat treatment unit 2a.

By using the polymer resin recovery apparatuses 1, 11, 12, and 13 of the present invention, a temperature rise and/or pressure rise to the treatment temperature and/or treatment pressure in the heat treatment can be achieved in a short time. By using the polymer resin recovery apparatuses 1, 11, 12, and 13 of the present invention, for example, a temperature rise from 80 °C to the treatment temperature can be achieved within 60 minutes, more preferably within 30 minutes, even more preferably within 20 minutes, still more preferably within 10 minutes, and particularly preferably within 5 minutes. When the time required to raise the temperature from 80 °C to the treatment temperature is within 60 minutes, the polymer resin 62 with further suppressed deterioration can be recovered. By using the polymer resin recovery apparatuses 1, 11, 12, and 13 of the present invention, for example, a pressure rise from 0.05 MPa to the treatment pressure can be achieved within 60 minutes, more preferably within 30 minutes, even more preferably within 20 minutes, still more preferably within 10 minutes, and particularly preferably within 5 minutes. When the time required to raise the pressure from 0.05 MPa to the treatment pressure is within 60 minutes, the polymer resin 62 with further suppressed deterioration can be recovered.

By using the polymer resin recovery apparatuses 1, 11, 12, and 13 of the present invention, the polymer resin 62 can be efficiently recovered even if the heat treatment time is relatively short. The treatment time in the heat treatment may be set appropriately depending on the treatment temperature and treatment pressure, and is, for example, preferably 30 seconds to 240 minutes, more preferably 45 seconds or more, and even more preferably 1 minute or more, and is more preferably 180 minutes or less, even more preferably 120 minutes or less, and still more preferably 60 minutes or less. That is, the treatment time in the heat treatment is more preferably 45 seconds to 180 minutes, even more preferably 1 minute to 120 minutes, and still more preferably 1 minute to 60 minutes. When the treatment time is within the above range, the polymer resin 62 can be easily separated from the unmelted matter (such as a silicone resin) while suppressing deterioration such as decomposition of the polymer resin 62.

Since the polymer resin melted by heat treatment solidifies by cooling, the polymer resin that has been separated from the composite material 22 and the unmelted matter (such as a silicone resin) can be obtained as solid matter by cooling the polymer resin after heat treatment. The polymer resin in a solid state is preferable because it is easy to handle.

The polymer resin recovery apparatus of the present invention may have a cooling mechanism 5 capable of cooling the heat treatment unit 2a and/or the polymer resin after heat treatment. If the polymer resin recovery apparatus does not have a cooling mechanism 5, the polymer resin melted by the heat treatment will solidify by natural cooling. In order to further suppress deterioration of the resulting polymer resin 62, the polymer resin recovery apparatus preferably has a cooling mechanism 5. The cooling mechanism 5 may be a known cooler of a water-cooled type, an air-cooled type, or the like. The cooling mechanism 5 may be provided in the heat treatment unit 2a or the separation unit 2b, or may be provided downstream of the heat treatment unit 2a or the separation unit 2b. In order to recover the polymer resin 62 with further suppressed deterioration, it is preferable to provide the cooling mechanism 5 downstream of the heat treatment unit 2a. When the polymer resin recovery apparatus has a cooling mechanism 5 and a recovery unit 6, the cooling mechanism 5 is preferably provided in the recovery unit 6 or upstream of the recovery unit 6.

Specifically, in the cooling mechanisms 5 or 51 to cool high-pressure hot water and a melted polymer resin that are discharged from the discharge unit 4 illustrated in FIG. 1, FIG. 2, and FIG. 4, the treatment liquid (water containing the polymer resin) is cooled to a temperature lower than a temperature at which the polymer resin melts. When the composite material 22 contains polyamide/polyester as a polymer resin, the treatment liquid is preferably cooled, using the cooling mechanism 5 or 51, to a temperature lower than the melting point of the polymer resin in water, more preferably lower than 150 °C, and even more preferably lower than 130 °C, and may also be cooled to a temperature lower than 120 °C, 110°C, or 100 °C. Furthermore, in consideration of the taking out of the separated polymer resin, it is still more preferable to cool the treatment liquid to 80 °C or lower, and particularly preferably 60 °C or lower. The temperature of the treatment liquid is preferably 20 °C or higher, and more preferably 30 °C or higher. That is, the temperature of the treatment liquid is preferably 20 °C or higher and lower than the melting point temperature in water, more preferably 30 °C or higher and lower than 150 °C. The even more preferable range of the temperature of the treatment liquid includes a combination of 30 °C or higher and any of lower than 130 °C, lower than 120 °C, lower than 110 °C, lower than 100 °C, 80 °C or lower, and 60 °C or lower. As the cooling mechanisms 5 and 51, any cooling mechanism capable of adjusting the temperature of the treatment liquid within the above range may be used, and, for example, a liquid-circulation-type cooling mechanism in which a cooling liquid (such as cold water) is circulated can be used. In the polymer resin recovery apparatuses 1, 11, and 13, by adjusting the temperature of the treatment liquid to be lower than a temperature at which the polymer resin melts by the cooling mechanisms 5 or 51, the polymer resin solidifies and can be recovered in the recovery unit 6. Furthermore, by cooling the high-pressure hot water and the melted polymer resin discharged from the discharge unit 4 by the cooling mechanisms 5 or 51, the progress of deterioration of the polymer resin can be further suppressed.

When the cooled water is circulated and reused, if the cooling temperature is low, more energy is required to reheat it. In this case, during the treatment operation, the temperature of the treatment liquid is preferably 100 °C or higher, more preferably 110 °C or higher, and even more preferably 120 °C or higher, and when the treatment operation is interrupted and the polymer resin is taken out, it is also preferable to adjust the temperature to be lower than 100 °C, 80 °C or lower, or 60 °C or lower. That is, when the cooled water is circulated and reused, the cooling temperature during the treatment operation is preferably 100 °C or higher and lower than the melting point temperature in water, more preferably 110 °C or higher and lower than the melting point temperature in water, and even more preferably 120 °C or higher and lower than the melting point temperature in water, and is more preferably 100 °C or higher and lower than 150 °C, even more preferably 110 °C or higher and lower than 150 °C, and even more preferably 110 °C or higher and lower than 130 °C. When the treatment operation is interrupted and the polymer resin is taken out, the cooling temperature at the time of taking out is preferably 20 °C or higher and lower than 100 °C, more preferably 30 °C or higher and 80 °C or lower, and even more preferably 30 °C or higher and 60 °C or lower.

By using the polymer resin recovery apparatuses 1, 11, 12, and 13 of the present invention, for example, a temperature drop from the treatment temperature to 80 °C can be achieved within 60 minutes, preferably within 30 minutes, and more preferably within 20 minutes. When the time required to drop the temperature from the treatment temperature to 80 °C is within 60 minutes, the polymer resin can be recovered with further suppressed deterioration.

The polymer resin recovery apparatus of the present invention may have a recovery unit 6 to recover a solidified polymer resin. Specifically, in the recovery unit 6, the polymer resin that has been melted by heat treatment and separated from the composite material 22 and then solidified is recovered. When the polymer resin recovery apparatus does not have the recovery unit 6, the polymer resin 62 may be recovered from the heat treatment unit 2a, the discharge unit 4, or the like using a scooping net or the like, or the polymer resin 62 may be recovered by filtering the treatment liquid using a known filtering device provided separately from the polymer resin recovery apparatus. Since the polymer resin recovery apparatus of the present invention has the separation unit 2b equipped with the first filter member, the polymer resin 62 can be easily recovered. In order to increase the recovery efficiency of the polymer resin 62, it is preferable that the polymer resin recovery apparatus have the recovery unit 6. In the recovery unit 6, recovery may be performed by filtration using a filter member (second filter member) or the like, or by scraping using a scraping device equipped with scraping means such as a rotatable scraping blade. From the viewpoint of more efficient recovery of the polymer resin 62, it is preferable that recovery in the recovery unit 6 be performed by filtration using a second filter member.

The polymer resin recovery apparatus of the present invention may be configured such that a plurality of recovery units 6 are arranged in parallel (when the cooling mechanism 5 is integral with the recovery unit 6, a plurality of the cooling mechanisms 5 with the recovery units 6 are arranged in parallel), and the flow paths from the heat treatment unit 2a to the recovery units 6 are switched, so as to enable continuous treatment operation using other recovery units 6 while taking out the recovered polymer resin from at least one recovery unit 6. In this case, it is preferable that, in the recovery units 6 in treatment operation, the temperature of the treatment liquid be adjusted to the above-mentioned cooling temperature during the treatment operation by cooling with the cooling mechanism 5 or 51, and it is preferable that, in the recovery unit 6 from which the polymer resin is taken out, the temperature of the treatment liquid be adjusted to the above-mentioned cooling temperature at the time of taking out.

Furthermore, the polymer resin recovery apparatus of the present invention may be configured such that a plurality of heat treatment units 2a are arranged in parallel, and the flow paths from the heat treatment units 2a to the recovery unit 6 are switched, so that continuous treatment operation can be performed using other heat treatment units 2a while performing exchange of the composite material 22 to be heat-treated in at least one heat treatment unit 2a.

When a plurality of recovery units 6 and/or heat treatment units 2a are arranged in parallel, it is preferable that the numbers of the recovery units 6 and the heat treatment units 2a be independently either two, three, or four.

When the recovery unit 6 is of a container-type equipped with the second filter member provided downstream of the heat treatment unit 2a, the internal volume of the recovery unit 6 is, for example, preferably 0.5 L to 1500 L, more preferably 1 L or more, even more preferably 2 L or more, and still more preferably 5 L or more, and is more preferably 1200 L or less, even more preferably 1000 L or less, and still more preferably 800 L or less. That is, the internal volume of the recovery unit 6 is more preferably 1 L to 1200 L, even more preferably 2 L to 1000 L, and still more preferably 5 L to 800 L. When the internal volume of the recovery unit 6 is within the above range, the polymer resin 62 can be recovered more efficiently.

It is preferable that the second filter member 61 be detachable from and attachable to the recovery unit 6. By providing an opening C and a lid C capable of openably and closably sealing the opening C on the recovery unit 6, the second filter member 61 may be made detachable from and attachable to the recovery unit 6 through the opening C. When the second filter member 61 is detachable and attachable, the recovered polymer resin 62 can be easily taken out. When the second filter member 61 is detachable and attachable, the configuration of the second filter member 61 (such as the size of through holes) can be easily changed, and the ease of cleaning the polymer resin recovery apparatus is also improved.

The second filter member 61 has a plurality of through holes (B). The size per one through hole (B) of the second filter member 61 is a size that allows the polymer resin 62 solidified by cooling to be separated from water by filtration. Specifically, the opening area per one through hole (B) of the second filter member 61 is preferably 0.001 mm² to 1 cm², more preferably 0.005 mm² to 0.8 cm², and even more preferably 0.01 mm² to 0.5 cm². Of the plurality of through holes (B) of the second filter member 61, the proportion of the number of through holes (B) having an opening area within the above range is preferably 60% to 100%, more preferably 80% to 100%, and even more preferably 90% to 100%.

As the second filter member 61, a known filter having the through holes (B) of the above-described embodiment can be used. The second filter member 61 may be, for example, a woven or nonwoven fabric made of fibers of metal, resin, glass, or the like, or may be a plate-shaped or bucket-shaped member made of metal, resin, or the like with a plurality of fine holes pierced therethrough.

The polymer resin recovery apparatus of the present invention may be configured such that a liquid from which the polymer resin 62 has been removed in the recovery unit 6 or the like is directly discharged from a drain (not shown), or may be configured such that residue removal filters 111 and 112 are provided as necessary to remove fine residues from the liquid and then discharge the liquid from the drain. As the residue removal filters 111 and 112, a known filter having pores of a size that allows water to pass through but does not allow residues that are desired to be removed to pass through can be used.

A water storage tank 9 may be provided downstream of the separation unit 2b or the recovery unit 6 (preferably downstream of the residue removal filters 111 and 112) to temporarily store the liquid from which the polymer resin 62 has been removed. By providing the water storage tank 9, it is possible to subject the liquid to further post-treatment (such as pH adjustment). Furthermore, by providing a high-pressure hot water preparation mechanism 7b downstream of the water storage tank 9, water stored in the water storage tank 9 can be used as raw water for high-pressure hot water. When the above post-treatment is performed in the water storage tank 9, a second water storage tank (not shown) for storing water after post-treatment may be further provided. When the liquid from which the polymer resin 62 has been removed is reused as raw water for high-pressure hot water, the provision of the second water storage tank allows the post-treatment of the liquid in the water storage tank 9 without stopping the supply of high-pressure hot water. The internal volumes of the water storage tank 9 and the second water storage tank are not particularly limited, and may be appropriately designed in accordance with the amount of water to flow through the polymer resin recovery apparatus.

As the pressure adjustment mechanism 71 constituting the high-pressure hot water preparation mechanism 7b, a valve or the like can be used, and a pressure adjustment valve equipped with a pressure controller is preferably used. The heating mechanism 72 constituting the high-pressure hot water preparation mechanism 7b may be, for example, of an optical-heating (infrared) type, an IH heater type, an alumina heater type, or an oil heater type.

If the polymer resin recovery apparatus does not have the high-pressure hot water preparation mechanism 7b, a known high-pressure hot water production device may be connected to the hot water supply unit 3 to supply high-pressure hot water to the heat treatment unit 2a.

In addition to the above configurations, each of the polymer resin recovery apparatuses 1, 11, 12, and 13 may be provided with devices such as a liquid feeding device (e.g., a liquid feeding pump), a thermometer, and a pressure gauge at any desired location.

The composite material 22 to be treated in each of the polymer resin recovery apparatuses 1, 11, 12, and 13 of the present invention contains a polymer resin.

As the composite material 22, various molded products (preferably, various molded products that have been used and should be recycled) and scraps generated during the manufacture of molded products can be used. Examples of the composite material 22 include textile products such as an airbag fabric, film products, and bottle products. Textile products are preferred, and an airbag fabric is more preferred. The airbag fabric is specifically a product in which the surface of a base fabric formed from a polymer resin such as a polyamide-based resin or a polyester-based resin is coated with a silicone resin. In the airbag fabric, a silicone resin may be applied to at least one surface of the base fabric. When the composite material 22 is an airbag fabric, scraps generated during the manufacture of airbags, waste materials such as used airbags, and the like may be used as the airbag fabric. When used airbags are used, it is preferable to cut or shred them into pieces of fabric.

The polymer resin constituting the airbag fabric is preferably a polyamide-based resin or a polyester-based resin. The base fabric that is a polyamide fabric or a polyester fabric is preferably a woven fabric composed of multifilament polyamide fibers or multifilament polyester fibers. Examples of the woven fabric include plain weaves, twill weaves, satin weaves, and modified weaves of these weaves.

The number of filaments in a multifilament yarn constituting the woven fabric (base fabric) is, for example, preferably 30 to 200, and more preferably 40 to 180, in order to recover the polymer resin 62 with higher recyclability. The number of filaments can be determined by counting them from a cross-sectional photograph of the multifilament yarn.

The total fineness of the multifilament yarn constituting the woven fabric (base fabric) is, for example, preferably 200 dtex to 1000 dtex, and more preferably 250 dtex to 800 dtex, in order to recover the polymer resin 62 with higher recyclability. The total fineness of the multifilament yarn can be measured in accordance with JIS L1013 (2010) 8.3.1.

The tensile strength of the multifilament yarn constituting the woven fabric (base fabric) is, for example, preferably 6.0 cN/dtex to 10 cN/dtex, and more preferably 6.5 cN/dtex to 9.5 cN/dtex, in order to recover the polymer resin 62 with higher recyclability. The tensile strength of the multifilament yarn can be measured in accordance with JIS L1013 (2010) 8.5.1.

The woven fabric (base fabric) has a weaving density of, for example, preferably 35 threads/2.54 cm to 80 threads/2.54 cm, and more preferably 40 threads/2.54 cm to 75 threads/2.54 cm, in both the warp and weft directions, in order to recover the polymer resin 62 with higher recyclability. The weaving density can be measured in accordance with JIS L1096 (2010) 8.6.1.

The woven fabric (base fabric) has a cover factor (CF) of, for example, preferably 1,500 to 2,500, and more preferably 1,700 to 2,300, in order to recover the polymer resin 62 with higher recyclability. The cover factor is an index of the coverage of a woven fabric and can be calculated according to the following formula.

CF = (total fineness of warp)^{0.5} × warp density + (total fineness of weft)^{0.5} × weft density

In the polymer resin recovery apparatus of the present invention, on the basis of the fact that a polymer resin in a water-containing state has a lowered melting point and turns into a melted state even at a relatively low temperature, the polymer resin is released from the composite material 22 by performing heat treatment in a water-containing state.

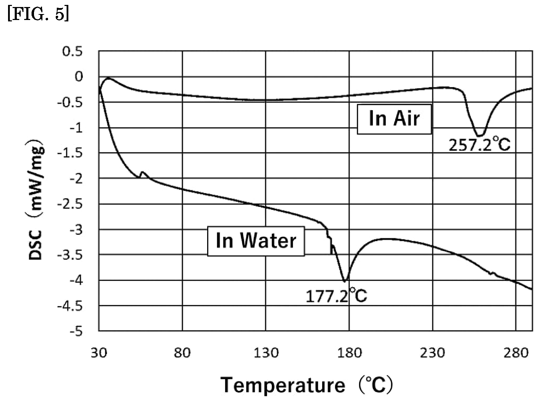

Therefore, the polymer resin contained in the composite material 22 is preferably a polymer resin that is melted by high-pressure hot water (preferably, water at 1.0 MPa to 4.0 MPa and 160 °C to 250 °C), and preferred examples thereof include a polyamide-based resin and polyester-based resin. The present inventors have confirmed that, when a polyamide-based resin and a polyester-based resin are treated with high-pressure hot water (water at 1.0 MPa to 4.0 MPa and 160 °C to 250 °C (preferably 180 °C to 250 °C)), their melting points become lower than their melting points in air, and thus, these resins are sufficiently melted by this treatment. Specifically, for a melting point of nylon 66, which is a polyamide-based resin, the heat flow rate was measured using a differential scanning calorimeter (DSC; "DSC 214 Polyma" manufactured by NETZSCH Japan K.K.) to confirm the melting points in air and in water. The measured melting point in air was 257 °C, whereas the measured melting point in water was 177 °C. In measurement by DSC, 10 mg of nylon 66 (for measurement in air) or 10 mg of nylon 66 and 19 mg of water (for measurement in water) were placed in a pressure-resistant pan for DSC measurement, measurement was performed in the temperature range of 30 °C to 300 °C at a heating rate of 10 °C/min, and the temperature at the maximum endothermic peak was taken as the melting temperature (melting point). The DSC measurement data of nylon 66 in air and in water are shown in FIG. 5. As shown in FIG. 5, the melting point of nylon 66 in water was lower by about 80 °C than that in air. Similarly, when the melting points of polyethylene terephthalate were measured using DSC, it was found that the melting point in water was lower by about 30 °C than that in air.

The polyamide-based resin is a polymer having an amide bond in the main chain. Examples of the polyamide-based resin include polycaproamide (nylon 6), polyhexamethylene adipamide (nylon 66), polytetramethylene adipamide (nylon 46), polyhexamethylene sebacamide (nylon 610), polyhexamethylene dodecamide (nylon 612), polylauryl lactam (nylon 12), polyundecanamide (nylon 11), and copolymers or mixtures thereof. As an airbag fabric having a base fabric formed from a polyamide-based resin, polycaproamide resin obtained by polycondensation of ε-caprolactam, commonly called nylon 6, and nylon 66 are preferably used in terms of heat resistance and cost, and nylon 66 is particularly preferably used. Therefore, nylon 6 and nylon 66 are preferred as a polyamide-based resin contained in the composite material 22 in terms of versatility, and nylon 66 is more preferred.

The polyester-based resin is formed by reacting a carboxylic acid component with a hydroxy group component. Examples of the carboxylic acid component include terephthalic acid, isophthalic acid, adipic acid, sebacic acid, and naphthalenedicarboxylic acid. Examples of the hydroxy group component include ethylene glycol, 1,4-butanediol, diethylene glycol, neopentyl glycol, and cyclohexanedimethanol. Examples of the polyester-based resin include polyethylene terephthalate, polytrimethylene terephthalate, polybutylene terephthalate, and copolymer polyesters obtained by copolymerizing these polymers with a third component. As an airbag fabric having a base fabric formed from a polyester-based resin, polyethylene terephthalate is usually preferably used because both cost efficiency and physical properties such as strength can be satisfied. Therefore, polyethylene terephthalate is preferred as the polyester-based resin contained in the composite material 22 in terms of versatility.

The content of the polymer resin in the composite material 22 is preferably 40% by mass to 99.5% by mass, more preferably 50% by mass or more, and even more preferably 60% by mass or more, and is more preferably 99% by mass or less, and even more preferably 97% by mass or less. That is, the content of the polymer resin in the composite material 22 is more preferably 50% by mass to 99% by mass, and even more preferably 60% by mass to 97% by mass.

The composite material 22 contains other components in addition to the above polymer resin. The other components preferably are not melted or decomposed by high-pressure hot water (preferably water at 1.0 MPa to 4.0 MPa and 160 °C to 250 °C (preferably 180 °C to 250 °C)), or are water-soluble. A component that is not melted or decomposed by the high-pressure hot water is retained within the heat treatment unit 2a because the movement thereof is restricted by the first filter member 21, and as a result, the polymer resin 62 with high purity can be recovered. Furthermore, a component that is water-soluble is not captured by the second filter member 61 of the recovery unit 6, and as a result, the polymer resin 62 with high purity can be recovered more easily.

Examples of the other components include an antioxidant, a heat stabilizer, a smoothening agent, an antistatic agent, a thickener, a flame retardant, a weather resistance agent, a coloring inhibitor, a colorant, a reinforcing agent, and a surface treatment agent. Specifically, a silicone resin is preferable as the other components. The present inventors have confirmed that a silicone resin is not melted or decomposed by high-pressure hot water (water at 1.0 MPa to 4.0 MPa and 160 °C to 250 °C (preferably 180 °C to 250 °C)).

As specific examples of the silicone resin, although not particularly restricted, addition-polymerizable silicone rubbers can be given. Examples thereof include dimethylsilicone rubber, methylvinylsilicone rubber, methylphenylsilicone rubber, trimethylsilicone rubber, fluorosilicone rubber, methylsilicone resin, methylphenylsilicone resin, methylvinylsilicone resin, epoxy-modified silicone resin, acrylic-modified silicone resin, and polyestermodified silicone resin. Among these, an addition-polymerizable methylvinylsilicone rubber is preferable.

The composite material 22 may be a laminate of a polymer resin and any of the other components. That is, the composite material 22 may be a laminate including a layer formed from a polymer resin (for example, a polyamide fabric or a polyester fabric) and a layer formed from any of the other components (for example, a silicone resin layer).

When the composite material 22 is an airbag fabric, the airbag fabric preferably has a silicone resin layer formed by applying a coating resin containing a silicone resin to at least one surface of a base fabric.

The viscosity of the coating resin is preferably 5000 mPa·sec to 40000 mPa sec, and more preferably 7000 mPa·sec to 38000 mPa·sec. The coating resin may be solvent-based or solvent-free as long as the viscosity falls within the above-mentioned range, but a solvent-free coating resin is preferable. In this description, the viscosity of a coating resin composition containing an additive other than the resin, that is, the viscosity of the resin actually applied to the base fabric, is defined as the "viscosity of the coating resin".

The coating resin may contain an additive other than the silicone resin and a solvent. Examples of the additive include reactive curing agents such as a platinum-based catalyst (specifically, platinum black, chloroplatinic acid, an alcohol-modified product of chloroplatinic acid, a complex of chloroplatinic acid with olefin, aldehyde, vinyl siloxane, or acetylene alcohol, etc.); adhesive aids such as an amino-based silane coupling agent, an epoxy-modified silane coupling agent, a vinyl-based silane coupling agent, a chloro-based silane coupling agent, and a mercapto-based silane coupling agent; reinforcing inorganic fillers such as fumed silica and dry silica; a crosslinkable silicone having the terminal groups adjusted (silicone resin); non-reinforcing inorganic fillers such as calcium carbonate, calcium silicate, and titanium dioxide; an antioxidant; an antistatic agent; a flame retardant; a weather resistance agent; a coloring inhibitor, and a colorant.

When a platinum-based catalyst is contained as a reactive curing agent, the content thereof is preferably 100 ppm to 2000 ppm, and more preferably 150 ppm to 1800 ppm, in terms of the amount of platinum metal, with respect to 100 parts by mass of the silicone resin.

When a silane coupling agent is contained as an adhesive aid, the content thereof is preferably 0.01 parts by mass to 3 parts by mass, and more preferably 0.02 parts by mass to 2 parts by mass, with respect to 100 parts by mass of the silicone resin.

When an inorganic filler is contained, the content thereof is preferably 0.1 parts by mass to 200 parts by mass, and more preferably 0.1 parts by mass to 100 parts by mass, with respect to 100 parts by mass of the silicone resin.

The application of the coating resin (i.e., silicone resin) to the base fabric may be performed by any conventional known coating method. Examples of the coating method include knife coating, roll coating, reverse coating, gravure coating, gravure reverse coating, and kiss coating. The silicone resin is preferably applied by knife coating.

The amount of the silicone resin applied to the airbag fabric, which is the composite material 22, is preferably 5 g/m² to 150 g/m², more preferably 7 g/m² or more, and even more preferably 10 g/m² or more, and is more preferably 120 g/m² or less, even more preferably 100 g/m² or less, and still more preferably 70 g/m² or less, from the viewpoint of ease of separation of the polymer resin from the silicone resin. That is, the amount of the silicone resin applied to the composite material 22 is more preferably 7 g/m² to 120 g/m², even more preferably 10 g/m² to 100 g/m², and still more preferably 10 g/m² to 70 g/m².

When the composite material 22 is an airbag fabric, a non-coated airbag fabric and/or a non-silicone coated airbag fabric may be contained in a mixed manner in the airbag fabric, but it is preferable that a silicone-coated airbag fabric in which a silicone resin layer is formed on at least one surface of a base fabric be contained in an amount of 50% by mass or more of the entire airbag fabric. The silicone-coated airbag fabric is more preferably contained in an amount of 60% by mass or more, even more preferably 70% by mass or more, and particularly preferably 80% by mass or more of the entire airbag fabric.

From the viewpoint of ease of separation of the polymer resin, the weight ratio of the polymer resin in the composite material 22 is preferably 50% by weight to 99% by weight, more preferably 55% by weight or more, even more preferably 60% by weight or more, and still more preferably 70% by weight or more, and is more preferably 97% by weight or less, even more preferably 95% by weight or less, and still more preferably 93% by weight or less. That is, the weight ratio of the polymer resin in the composite material 22 is more preferably 55% by weight to 97% by weight, even more preferably 60% by weight to 95% by weight, and still more preferably 70% by weight to 93% by weight. When the composite material 22 is an airbag fabric and the proportion of materials other than the polymer resin in the base fabric is small (for example, 5% by mass or less, or even 3% by mass or less), the above weight ratio of the polymer resin may be read as the weight ratio of the base fabric.

The content of the other components in the composite material 22 is preferably 0.5% by mass to 60% by mass, more preferably 50% by mass or less, and even more preferably 40% by mass or less, and may be 1% by mass or more or 3% by mass or more. That is, the content of the other components in the composite material 22 is more preferably 1% by mass to 50% by mass, and even more preferably 3% by mass to 40% by mass.

Since the time period for which the polymer resin 62 recovered by each of the polymer resin recovery apparatuses 1, 11, 12, and 13 of the present invention is exposed to high pressure and high temperature is short, deterioration of the polymer resin 62 is suppressed. Furthermore, since the polymer resin recovery apparatus 12 of the present invention uses a water flow to separate the polymer resin 62, and the polymer resin recovery apparatuses 1, 11, and 13 of the present invention use a water flow to separate and recover the polymer resin 62, these are simple apparatuses that do not require complicated operations.

The polymer resin 62 recovered using each of the polymer resin recovery apparatuses 1, 11, 12, and 13 of the present invention may be subjected to post-treatment such as washing with a washing liquid such as water or an organic solvent, and drying, as appropriate.

After being subjected to post-treatment such as washing with a washing liquid such as water or an organic solvent and drying, the recovered polymer resin 62 can be melted by heat or with a solvent, and pelletized or formed into a sheet to obtain a recycled polymer resin composition.

The polymer resin 62 recovered by each of the polymer resin recovery apparatuses 1, 11, 12, and 13 of the present invention preferably has a low silicone content. In the recycled polymer resin composition obtained from the polymer resin 62, the silicone content is preferably 50000 ppm or less, more preferably 40000 ppm or less, and even more preferably 30000 ppm or less. By setting the silicone content to be equal to or less than the above upper limit, when the recycled polymer resin composition is processed into fibers, films, molded products, and the like, problems such as thread breakage and film rupture are less likely to occur, and reduction in strength caused by foreign matter, deterioration of appearance such as surface roughness and foreign matter defects are less likely to occur. Furthermore, in the processing using the recycled polymer resin composition, when the melted resin is filtered, clogging of the filter is unlikely to occur, so that processed products can be produced continuously and stably. When the composite material 22 is an airbag fabric, a silicone-based oil agent may be used in the spinning and weaving process for the base fabric of the airbag fabric, and the silicone-based oil agent may not be completely removed. The content of the silicone resin can be reduced by increasing the precision of the first filter member, but this may result in a slower filtration rate and reduced productivity. Considering the above circumstances, the lower limit of the silicone content in the recycled polymer resin composition obtained from the polymer resin 62 may be 2000 ppm, 4000 ppm, or 5000 ppm. A recycled polymer resin composition with a low silicone content can be used in a wide range of applications as a material recycled polymer resin composition. The silicone content can be measured, for example, by the following method.

The polymer resin 62 recovered by the polymer resin recovery apparatus is pulverized by a freeze pulverizing method to prepare a measurement sample. Measurement is performed using a fluorescent X-ray measurement device (XL3t-950S, manufactured by Thermo Fisher Scientific K.K.) in Cu/Zn mode in mineral mode (FP method), with a measurement visual field of an 8 mm diameter spot. The Si element amount (ppm by mass) in the obtained sample can be evaluated as the silicone content.

In this description, the recovered polymer resin 62 may contain various additives derived from the base fabric and a trace amount of a coating agent, and although it is sometimes referred to as a polymer resin composition, it may also be considered to be the same as a polymer resin.

When the silicone content is measured by the above method, even nylon 66 (polyamide-based resin) as a raw material for the airbag base fabric may have a silicone content of 3000 to 3500 ppm, and when the sample is kneaded and pelletized without the coating agent peeled off, the silicone content may be 250000 to 300000 ppm. Considering additives (such as silicone oil) derived from the base fabric, when the silicone content is equal to or less than the above-mentioned upper limit, it can be considered that most of the coating agent (coating resin containing silicone resin) has been removed.

The silicone content can be further reduced by reducing the opening area of the first filter member, or by passing the polymer resin 62 through an additional filter when the polymer resin 62 is pelletized or formed into a sheet. The silicone content can also be reduced by increasing the amount of water (high-pressure hot water) used relative to the composite material 22 during the heat treatment. The lower limit of the amount of water used relative to the composite material 22 is preferably 1.1 times by mass, more preferably 1.5 times by mass, even more preferably 2 times by mass, still more preferably 5 times by mass, further preferably 10 times by mass, and still further preferably 30 times by mass. By setting the amount of water used relative to the composite material 22 to be equal to or more than the above-mentioned lower limit, the separation efficiency of the polymer resin is improved. The upper limit of the amount of water used relative to the composite material 22 is preferably 10000 times by mass, more preferably 5000 times by mass, and even more preferably 1000 times by mass, but is not particularly limited thereto. In a flow-through-type apparatus having a pump 82 as the water flow generator 8, as illustrated in FIG. 1 and FIG. 2, it is possible to further increase the amount of water used relative to the composite material 22. That is, the amount of water used relative to the composite material 22 is, for example, preferably 1.1 times to 10000 times by mass, more preferably 1.5 times to 10000 times by mass, even more preferably 2 times to 10000 times by mass, still more preferably 5 times to 10000 times by mass, further preferably 10 times to 5000 times by mass, and still further preferably 30 times to 1000 times by mass.

The polymer resin 62 recovered by each of the polymer resin recovery apparatuses 1, 11, 12, and 13 preferably contains substantially no components other than the polymer resin 62. The phrase "contains substantially no components" means that the content of components other than the polymer resin in the polymer resin 62 is 3 % by mass or less, and the content is preferably 1% by mass or less, more preferably 0.5% by mass or less, and even more preferably 0.1% by mass or less. There is no particular lower limit of the content, and the lower limit is preferably 0% by mass and may be 0.01% by mass or more. That is, the content of components other than the polymer resin in the polymer resin 62 is preferably 0% by mass to 3% by mass, more preferably 0% by mass to 1% by mass, even more preferably 0% by mass to 0.5% by mass, and still more preferably 0.01% by mass to 0.1% by mass or less. The polymer resin 62 that contains substantially no components other than the polymer resin 62 has high recyclability. The content of components other than the polymer resin 62 contained in the polymer resin 62 can be calculated based on values obtained using, for example, a Fourier transform infrared spectrophotometer (FT-IR) or the like.

Furthermore, the polymer resin 62 recovered by each of the polymer resin recovery apparatuses 1, 11, 12, and 13 preferably has a low content of alkali metals and alkaline earth metals. The content of alkali metals is the sum of the contents of potassium, sodium, and lithium, and the content of alkaline earth metals is the sum of the contents of calcium and magnesium. The total content of alkali metals and alkaline earth metals is preferably 1000 ppm or less, more preferably 700 ppm or less, even more preferably 500 ppm or less, still more preferably 250 ppm or less, and still further preferably 200 ppm or less. The lower limit of the total content of alkali metals and alkaline earth metals may be 1 ppm, 5 ppm, or 10 ppm. That is, the total content of alkali metals and alkaline earth metals in the polymer resin 62 is preferably 1 ppm to 1000 ppm, more preferably 1 ppm to 700 ppm, even more preferably 1 ppm to 500 ppm, still more preferably 5 ppm to 250 ppm, and still further preferably 10 ppm to 200 ppm.

The total content of alkali metals is preferably 700 ppm or less, more preferably 500 ppm or less, and the smaller total content in the order of 300 ppm or less, 250 ppm or less, 200 ppm or less, 150 ppm or less, and 120 ppm or less is further preferable. The content of each of potassium, sodium, and lithium is preferably 500 ppm or less, more preferably 300 ppm or less, even more preferably 250 ppm or less, still more preferably 200 ppm or less, further preferably 150 ppm or less, and still further preferably 120 ppm or less. In particular, the content of sodium is preferably 100 ppm or less, more preferably 70 ppm or less, even more preferably 50 ppm or less, still more preferably 40 ppm or less, further preferably 30 ppm or less, and still further preferably 20 ppm or less. The preferred range of the content of lithium is the same as the preferred range of the content of sodium. It is also preferable that both the content of sodium and the content of lithium be within the above range.

The preferred range of the total content of alkaline earth metals is the same as the preferred range of the total content of alkali metals. The content of each of calcium and magnesium is preferably 500 ppm or less, more preferably 300 ppm or less, even more preferably 200 ppm or less, still more preferably 100 ppm or less, and still further preferably 50 ppm or less. The content of at least one of calcium and magnesium is preferably 70 ppm or less, more preferably 50 ppm or less, even more preferably 40 ppm or less, still more preferably 30 ppm or less, further preferably 20 ppm or less, and still further preferably 15 ppm or less. It is also preferable that both the content of calcium and the content of magnesium be within the above range.

Furthermore, it is preferable that the respective contents of sodium, lithium, calcium, and magnesium be all within the preferred ranges described above for the respective contents. Each or all of the contents of lithium, calcium, and magnesium may be 10 ppm or less, or 5 ppm or less.

By setting the contents of alkali metals and alkaline earth metals to be within the above ranges, it is possible to obtain an excellent polymer resin composition that is advantageous in that the recovered polymer resin 62 has high thermal stability, is less prone to be colored when remelted in use, and contains less foreign matter due to residual metals.

The element contents of alkali metals and alkaline earth metals can be measured, for example, by the following method.

First, the recovered polymer resin is formed into a sheet sample, and the sheet sample is subjected to the following pretreatment to prepare a measurement solution. Next, the elemental concentrations in the obtained measurement solution are measured under the following conditions using a high-frequency inductively-coupled plasma (ICP) emission spectrometer (SPECTROBLUE, manufactured by Hitachi High-Tech Science Corporation), and the element contents in the sample are calculated.

### [Pretreatment]

The sheet sample formed from the recovered polymer resin is weighed into a platinum crucible and subjected to preliminary carbonization on a hot plate up to 400 °C. Then, the resultant is subjected to ashing treatment at 550 °C for 8 hours using an electric furnace FO610 manufactured by Yamato Scientific Co., Ltd. After the ashing, small amounts of 6.0 N hydrochloric acid and hydrofluoric acid are added, and acid decomposition is performed on a hot plate, and heat treatment is performed until the acids are completely vaporized. After the completion of the acid decomposition, a measurement solution is prepared by making up the volume to 20 mL with 1.2 N hydrochloric acid.

### [ICP Optical Emission Analysis Conditions]

Plasma output: 1400W
Plasma gas: 12.0 L/min
Auxiliary gas: 1.0 L/min
Nebulizer: Cross flow nebulizer
Chamber: Scott chamber
Measurement wavelength (nm):
   Mg: 280.27
   Ca: 315.887
   K: 766.491
   Na: 589.592
   Li: 670.78

The higher the recovery rate of the polymer resin 62 recovered by each of the polymer resin recovery apparatuses 1, 11, 12, and 13, the more preferable it is. The upper limit thereof is 100% by mass, and is preferably 1% by mass or more, more preferably 5% by mass or more, even more preferably 7% by mass or more, and still more preferably 10% by mass or more. The recovery rate of the polymer resin 62 can be calculated from the content (parts by mass) of the polymer resin in the composite material 22 before heat treatment and the amount (parts by mass) of the recovered polymer resin 62. The recovery rate of the polymer resin 62 can also be determined by measuring the weight (B parts by weight) of the polymer resin 62 recovered after the heat treatment, using the weight (A parts by weight) of the composite material 22 before the heat treatment and the weight ratio (C%) of the polymer resin in the composite material 22 before the heat treatment, and calculating according to the following formula. $Recovery rate \left(%\right) = \left\{B/\left[A\times \left(C/100\right)\right]\right\} \times 100$

The degree of deterioration of the polymer resin 62 recovered by each of the polymer resin recovery apparatuses 1, 11, 12, and 13 can be checked by the viscosity (for example, relative viscosity or intrinsic viscosity) of the polymer resin 62. Since the viscosity is proportional to a molecular weight of a resin, it can be said that the higher the viscosity, the greater the molecular weight of the recovered polymer resin 62, that is, the hydrolysis of the polymer resin is suppressed, and the recovered polymer resin maintains a polymer-state. Specifically, when the polymer resin 62 is a polyamide-based resin, the polyamide-based resin having a relative viscosity of 1.3 or more (preferably 1.5 or more, more preferably 1.7 or more, even more preferably 1.9 or more, still more preferably 2.1 or more, and still further preferably 2.3 or more) can be suitably used for material recycling. When the polymer resin 62 is a polyester-based resin, the polyester-based resin having an intrinsic viscosity of 0.3 dl/g or more (preferably 0.5 dl/g or more, more preferably 0.7 dl/g or more) can be suitably used for material recycling.

The relative viscosity (RV) of the polymer resin 62 can be determined by dissolving 0.25 g of the polymer resin in 46 g of 96% sulfuric acid, placing 10 mL of the resulting solution in an Ostwald viscometer to measure at 20 °C, and calculating according to the following formula. $RV = T / T 0$ (RV: Relative viscosity, T: Dropping time of the sample solution, T0: Dropping time of the solvent)

The intrinsic viscosity (η) of the polymer resin 62 can be determined by dissolving 0.1 g of the polymer resin in 25 mL of a mixed solvent of phenol/1,1,2,2-tetrachloroethane (60/40 (weight ratio)) and measuring at 30 °C using an Ostwald viscometer.

When the relative viscosity (RV0) of the polymer resin before the heat treatment can be measured, it is preferable that the ratio (RV/RV0) of RV (relative viscosity of the recovered polymer resin 62) to RV0 be 0.4 or more (preferably 0.5 or more, more preferably 0.6 or more, even more preferably 0.7 or more, and still more preferably 0.8 or more). When the value of RV/RV0 is within the above range, the polymer resin 62 recovered by each of the polymer resin recovery apparatuses 1, 11, 12, and 13 has suppressed deterioration and can be suitably used for material recycling.

When the intrinsic viscosity (η0) of the polymer resin before the heat treatment can be measured, it is preferable that the ratio (η/η0) of η (intrinsic viscosity of the recovered polymer resin 62) to η0 be 0.3 or more (preferably 0.5 or more, more preferably 0.7 or more). When the value of n/n0 is within the above range, the polymer resin 62 recovered by the polymer resin recovery apparatuses 1, 11, 12, and 13 has suppressed deterioration and can be suitably used for material recycling.

The polymer resin 62, which can be suitably used for material recycling, can be reused without being subjected to further treatment such as polymerization. Therefore, the polymer resin 62 is advantageous from the viewpoint of energy costs and has particularly high recyclability.

The use of the polymer resin recovered by the polymer resin recovery apparatus of the present invention is not particularly restricted because deterioration of the polymer resin is suppressed. For example, the recovered polymer resin can be reused by a method of decomposing it into monomers and repolymerizing them (chemical recycling) or by a method of re-pelletizing through melting without decomposing it into monomers (material recycling). From the viewpoint of energy costs, it is preferable to subject the recovered polymer resin to material recycling.

The polymer resin (preferably, polyamide-based resin or polyester-based resin) recovered by the polymer resin recovery apparatus of the present invention is capable of forming a recycled product containing the polymer resin in at least part of raw materials by chemical recycling or material recycling.

The present application claims priority to Japanese Patent Application No. 2023-183802 and Japanese Patent Application No. 2023-183803, both filed on October 26, 2023, Japanese Patent Application No. 2024-097737 filed on June 17, 2024, and Japanese Patent Application No. 2024-162410 filed on September 19, 2024. The entire disclosures of Japanese Patent Application No. 2023-183802 and Japanese Patent Application No. 2023-183803, both filed on October 26, 2023, Japanese Patent Application No. 2024-097737 filed on June 17, 2024, and Japanese Patent Application No. 2024-162410 filed on September 19, 2024, are incorporated herein by reference.

### EXAMPLES

Hereinafter, the present invention will be described in more detail with reference to Examples. However, the present invention is, of course, not limited to the following Examples, and it can be naturally carried out with appropriate modifications within the range consistent with the spirit described above and below, and all such embodiments are included within the technical scope of the present invention.

In the following Examples, a polymer resin recovery apparatus 12 shown in FIG. 3 was used to treat a composite material and recover a polymer resin, and in the Comparative Examples, an apparatus configured by removing a separation unit 2b and a water flow generator 8 from the polymer resin recovery apparatus 12 shown in FIG. 3 was used to treat a composite material. In the following Examples and Comparative Examples, the following polyamide resin airbag fabric 1 was used as the composite material.

### [Polyamide Resin Airbag Fabric 1]

A polyamide 66 multifilament yarn containing 68 filaments having an original yarn strength of 8.4 cN/dtex and a total fineness of 470 dtex was used to form a plain-woven fabric having a warp density of 46 yarns/2.54 cm, a weft density of 46 yarns/2.54 cm, and a cover factor of 1994. A solvent-free addition-polymerizable vinyl methyl silicone resin having a resin viscosity of 14000 mPa·sec was applied to one surface of this plain-woven fabric (base fabric) and dried at 200 °C for one minute, thereby obtaining a polyamide resin airbag fabric 1 having a resin coating amount of 25 g/m². The weight ratio of the polyamide resin in the polyamide resin airbag fabric 1 was 87%.

In the following Examples and Comparative Examples, a polyamide resin, which is a polymer resin, recovered from the polyamide resin airbag fabric 1 was evaluated by the following procedure.

### [Recovery Rate]

In the heat treatment unit 2a after the heat treatment, the polyamide resin separated from the silicone resin by the separation unit 2b was recovered. The weight (B parts by weight) of the recovered polyamide resin was measured, and the weight (A parts by weight) of the sample before treatment and the weight ratio (C%) of the polyamide resin in the sample before treatment were used to calculate a recovery rate according to the following formula. $Recovery rate \left(%\right) = \left\{B/\left[A\times \left(C/100\right)\right]\right\} \times 100$

### [Silicone Content]

In the heat treatment unit 2a after the heat treatment, the polyamide resin separated from the silicone resin by the separation unit 2b was recovered. The recovered polyamide resin was pulverized by a freeze pulverizing method to prepare a measurement sample, and measurement was performed using a fluorescent X-ray measurement device (XL3t-950S, manufactured by Thermo Fisher Scientific K.K.). Specifically, measurement was performed in Cu/Zn mode in mineral mode (FP method) with a measurement visual field of an 8 mm diameter spot. The Si element amount (ppm by mass) in the measurement sample was evaluated as the silicone content.

In the above measurement, the silicone content of the polyamide resin airbag fabric 1 before treatment was 250000 ppm by mass.

### [Relative Viscosity]

In the heat treatment unit 2a after the heat treatment, the polyamide resin separated from the silicone resin by the separation unit 2b was recovered. In 46 g of 96% sulfuric acid, 0.25 g of the recovered polyamide resin was dissolved, and 10 mL of the resulting solution was placed in an Ostwald viscometer to measure at 20 °C. The relative viscosity was calculated from the following formula. Since a relative viscosity is proportional to a molecular weight of a resin, it can be said that the higher the relative viscosity, the greater the molecular weight of the recovered polyamide resin, that is, the recovered polyamide resin maintained a polymer-state. $RV = T / T 0$ (RV: Relative viscosity, T: Dropping time of the sample solution, T0: Dropping time of the solvent)

### [Element Contents of Alkali Metals and Alkaline Earth Metals]

The recovered polyamide resin was formed into a sheet sample, and the sheet sample was subjected to the following pretreatment to prepare a measurement solution. Next, the elemental concentrations in the obtained measurement solution were measured under the following conditions using a high-frequency inductively-coupled plasma (ICP) emission spectrometer (SPECTROBLUE, manufactured by Hitachi High-Tech Science Corporation), and the element contents in the sample were calculated.

### [[Pretreatment]]

The sheet sample formed from the recovered polyamide resin was weighed into a platinum crucible and subjected to preliminary carbonization on a hot plate up to 400 °C. Then, the resultant was subjected to ashing treatment at 550 °C for 8 hours using an electric furnace FO610 manufactured by Yamato Scientific Co., Ltd. After the ashing, small amounts of 6.0 N hydrochloric acid and hydrofluoric acid were added, and acid decomposition was performed on a hot plate, and heat treatment was performed until the acids were completely vaporized. After the completion of the acid decomposition, a measurement solution was prepared by making up the volume to 20 mL with 1.2 N hydrochloric acid.

### [[ICP Optical Emission Analysis Conditions]]

Plasma output: 1400W
Plasma gas: 12.0 L/min
Auxiliary gas: 1.0 L/min
Nebulizer: Cross flow nebulizer
Chamber: Scott chamber
Measurement wavelength (nm):
   Mg: 280.27
   Ca: 315.887
   K: 766.491
   Na: 589.592
   Li: 670.78

### Example 1

The polyamide resin airbag fabric 1 was cut into a 40 mm square, and 10 g of the cut sample was placed in the heat treatment unit 2a (internal volume: 500 mL) of a high-pressure hot water treatment device 12 together with 300 mL of water. The cut sample was held in water using the first filter member 21 (a metal filter containing aluminum with a mesh opening of 2 mm) provided in the separation unit 2b and was heated to 220 °C using the heating mechanism 23 while generating a water flow in an upward direction by stirring with a stirring blade 81. The pressure at this time was 2.3 MPa. After the heat treatment was performed for 10 minutes, the inside of the heat treatment unit 2a was cooled to room temperature by a spot cooler (not shown), and the separated polyamide resin was recovered. The evaluation results of the recovered polyamide resin are shown in Table 1. In Example 1, the recovery rate of the polyamide resin was 39%, and the relative viscosity of the recovered polyamide resin was 2.06. Therefore, according to the recovery of the polymer resin using the polymer resin recovery apparatus 12 in Example 1, the silicone resin and the polyamide resin were able to be easily separated, and furthermore, the polyamide resin was able to be recovered in a polymer state (a state in which deterioration was suppressed).

### Examples 2 to 4

In Examples 2 to 4, polyamide resins were recovered in the same manner as in Example 1 except that the conditions were changed as shown in Table 1. The evaluation results of the recovered polyamide resins are shown in Table 1. According to the recovery of the polymer resin using the polymer resin recovery apparatus 12 in each of Examples 2 to 4, the silicone resin and the polyamide resin were able to be easily separated, and furthermore, the polyamide resin was able to be recovered in a polymer state (a state in which deterioration was suppressed).

In the polyamide resin recovered in each of Examples 1 to 4, the potassium content was 100 ppm by mass, the sodium content was 10 ppm by mass, and the lithium, calcium, and magnesium contents were all 2 ppm by mass or less.

### Comparative Example 1

In Comparative Example 1, a polyamide resin was recovered in the same manner as in Example 1, except that a polymer resin recovery apparatus not having the separation unit 2b and the water flow generator 8 was used. However, in Comparative Example 1, the polyamide resin melted by the heat treatment adhered to the silicone resin when solidified, and the polyamide resin separated from the silicone resin was not able to be recovered.

**[Table 1]**

| | Example 1 | Example 2 | Example 3 | Example 4 | Comparative Example 1 |
|---|---|---|---|---|---|
| Polymer Resin | Polyamide 66 | Polyamide 66 | Polyamide 66 | Polyamide 66 | Polyamide 66 |
| First Filter Member | Provided | Provided | Provided | Provided | Not Provided |
| Material of First Filter Member | Aluminum | Aluminum | Aluminum | Aluminum | - |
| Mesh Opening of First Filter Member (mm) | 2 | 2 | 0.5 | 2 | - |
| Water Flow Generation Method | Stirring | Stirring | Stirring | Stirring | None |
| Water Flow Velocity (m/s) | 0.02 | 0.02 | 0.02 | 0.005 | - |
| Heating Rate (°C/min) | 5 | 5 | 5 | 5 | 5 |
| Heat Treatment Temperature (°C) | 220 | 220 | 220 | 220 | 220 |
| Heat Treatment Pressure (MPa) | 2.3 | 2.3 | 2.3 | 2.3 | 2.3 |
| Heat Treatment Time (min) | 10 | 10 | 10 | 10 | 10 |
| Cooling Rate (°C/min) | 5 | 100 | 100 | 100 | 5 |
| Recovery Rate (%) | 39 | 35 | 17 | 12 | 0 |
| Silicon Content (ppm) | 2242 | 21000 | 14786 | 22574 | - |
| Relative Viscosity | 2.06 | 2.13 | 2.13 | 2.13 | - |

From the above, it has been found that, according to the polymer resin recovery apparatus of the present disclosure and the recovery method using the polymer resin recovery apparatus of the present disclosure, a polymer resin that is suitable for material recycling because it is in a polymer state (a state in which deterioration is suppressed) can be easily recovered from the polymer resin airbag fabric, which is a composite material.

### REFERENCE SIGNS LIST

1, 11, 12, 13: Polymer Resin Recovery Apparatus
2a: Heat Treatment Unit
2b: Separation Unit
21: First Filter Member
22: Composite Material
23: Heating Mechanism
3: Hot Water Supply Unit
4: Discharge Unit
5, 51: Cooling Mechanism
6: Recovery Unit
61: Second Filter Member
62: Solidified Polymer Resin
7a: Hot Water Preparation Mechanism
7b: High-Pressure Hot Water Preparation Mechanism
71: Pressure Adjustment Mechanism (High-Pressure Hot Water Preparation Mechanism)
72: Heating Mechanism (High-Pressure Hot Water Preparation Mechanism)
73: Heating Mechanism (Hot Water Preparation Mechanism)
8: Water Flow Generator
81: Stirring Blade
82: Pump
9: Water Storage Tank
91: Recovered Water Storage Tank
111, 112: Residue Removal Filter
121, 122, 123, 124, 125: Valve
131: Check Valve
141: Motor

## Claims

1. A polymer resin recovery apparatus for treating a composite material comprising a polymer resin with high-pressure hot water and recovering the polymer resin from the composite material, the apparatus comprising:
a heat treatment unit configured to accommodate the composite material and bring the composite material into contact with high-pressure hot water;
a separation unit comprising a first filter member through which the polymer resin melted in the heat treatment unit passes, while restricting movement of the composite material and movement of unmelted matter in the heat treatment unit; and
a water flow generator configured to supply a water flow to the separation unit.

2. The polymer resin recovery apparatus according to claim 1, comprising a cooling mechanism configured to cool the melted polymer resin separated in the separation unit together with high-pressure hot water to solidify the polymer resin.

3. The polymer resin recovery apparatus according to claim 2, comprising a recovery unit configured to recover the solidified polymer resin.

4. The polymer resin recovery apparatus according to claim 3, wherein the recovery unit comprises a second filter member to separate the solidified polymer resin by filtration.

5. The polymer resin recovery apparatus according to claim 1, comprising a hot water supply unit configured to supply hot water to the heat treatment unit.

6. The polymer resin recovery apparatus according to claim 5, comprising a hot water preparation mechanism upstream of the hot water supply unit.

7. The polymer resin recovery apparatus according to claim 1, wherein the heat treatment unit comprises a heating mechanism.

8. The polymer resin recovery apparatus according to claim 1, wherein the water flow generator is a stirring blade provided in the heat treatment unit.

9. The polymer resin recovery apparatus according to claim 1, comprising a discharge unit configured to discharge the polymer resin melted in the heat treatment unit together with high-pressure hot water.

10. The polymer resin recovery apparatus according to claim 1, wherein the first filter member is detachable and attachable.

11. The polymer resin recovery apparatus according to claim 1, wherein the first filter member comprises a metal.

12. The polymer resin recovery apparatus according to claim 11, wherein the metal comprises at least one selected from stainless steel and aluminum.

13. The polymer resin recovery apparatus according to claim 1, wherein the first filter member has a plurality of through holes (A), and an opening area of each through hole (A) is 0.001 mm² to 200 cm².

14. The polymer resin recovery apparatus according to claim 4, wherein the second filter member has a plurality of through holes (B), and an opening area of each through hole (B) is 0.001 mm² to 1 cm².

15. The polymer resin recovery apparatus according to claim 1, wherein the heat treatment unit has an internal volume of 0.5 L to 3000 L.

16. The polymer resin recovery apparatus according to claim 3, comprising a plurality of the recovery units.

17. The polymer resin recovery apparatus according to claim 1, comprising a plurality of the heat treatment units.

18. A method for recovering a polymer resin from a composite material comprising the polymer resin, using the polymer resin recovery apparatus according to any one of claims 1 to 17.

19. The method for recovering a polymer resin according to claim 18, wherein the composite material is an airbag fabric comprising silicone, and the polymer resin is a polyamide-based resin or a polyester-based resin.

20. A recycled product comprising, in at least part of raw materials, the polyamide-based resin or the polyester-based resin obtained by the method according to claim 19.

21. Use of the polymer resin recovery apparatus according to any one of claims 1 to 17 to recover a polymer resin from a composite material comprising the polymer resin.

22. The use of the polymer resin recovery apparatus according to claim 21, wherein the composite material is an airbag fabric comprising silicone, and the polymer resin is a polyamide-based resin or a polyester-based resin.
